Europäisches Patentamt

(19) European Patent Office

Office européen des brevets

(11) Publication number: **0 179 135**
**B1**

(12) EUROPEAN PATENT SPECIFICATION

(45) Date of publication of patent specification: **09.01.91**

(21) Application number: **85902312.9**

(22) Date of filing: **17.04.85**

(86) International application number:
**PCT/US85/00702**

(87) International publication number:
**WO 85/04818 07.11.85 Gazette 85/24**

(51) Int. Cl.⁵: **B 01 D 17/06,** B 03 C 5/00,
C 10 G 32/02

(54) Separating a component which forms a dispersion in, or which is dissolved in, continuous liquid.

(30) Priority: **17.04.84 US 601253**
**17.04.84 US 601272**
**17.04.84 US 601275**
**11.04.85 US 722162**
**11.04.85 US 722160**
**11.04.85 US 722107**

(43) Date of publication of application:
**30.04.86 Bulletin 86/18**

(45) Publication of the grant of the patent:
**09.01.91 Bulletin 91/02**

(84) Designated Contracting States:
**BE DE FR GB IT NL**

(56) References cited:
**US-A-1 838 929**
**US-A-2 060 839**
**US-A-2 061 197**
**US-A-2 108 258**

The file contains technical information
submitted after the application was filed and
not included in this specification

(73) Proprietor: **EXXON RESEARCH AND
ENGINEERING COMPANY**
**P.O.Box 390, 180 Park Avenue**
**Florham Park, New Jersey 07932 (US)**

(72) Inventor: **CERKANOWICZ, Anthony, E.**
**8 Fieldstone Drive**
**Livingston, NJ 07039 (US)**
Inventor: **MINTZ, Donald, J.**
**83 Seven Oaks Drive**
**Summit, NJ 07901 (US)**
Inventor: **BRONS, Cornelius, H.**
**41 Fairview Street**
**Washington, NJ 07882 (US)**
Inventor: **CHIMENTI, Robert, J., L.**
**63 Great Hills Road**
**Short Hills, NJ 07078 (US)**
Inventor: **CRANE, Irving, D., Jr.**
**11 Chestnut Hill Road**
**Randolph, NJ 07869 (US)**
Inventor: **FLANNERY, Brian, P.**
**24 River Bend Road**
**Clinton, NJ 08809 (US)**
Inventor: **SMITH, Floyd, E.**
**2 Shagbark Lane**
**East Windsor, NJ 08520 (US)**
Inventor: **RYAN, Douglas, G.**
**145 Andrea Drive**
**Rockaway, NJ 07866 (US)**

**EP 0 179 135 B1**

56 References cited:
US-A-2 151 318
US-A-3 129 157
US-A-3 616 460
US-A-4 139 441
US-A-4 194 956
US-A-4 200 509
US-A-4 255 777
US-A-4 469 582

74 Representative: **Mitchell, Alan et al**
**ESSO Engineering (Europe) Ltd. Patents &**
**Licences Mailpoint 72 Esso House Ermyn Way**
**Leatherhead, Surrey KT22 8XE (GB)**

**Description**

This invention relates to a method and apparatus for use in the separation of a dispersed phase (contaminant) from a continuous liquid phase. It is, however, also concerned with effecting growth in size of the particles/droplets/bubbles (or inclusions) which constitute the dispersed phase, and with promoting nucleation of a solute dissolved in a solvent to form a solution. Expressed generally, therefore, the invention can be regarded as relating to separating a component which is dissolved in or forms a dispersion in a continuous liquid.

The dispersed phase may be a solid, liquid, a gel or gas or any combination of these. Examples of contaminants are carbonaceous solids, metals and metal oxides (e.g., alumina fines), composites, water droplets, polymer chains and precipitates (such as wax crystals, asphaltenes, hot filtration sediment, and high molecular weight polar compounds). Examples of the application of this invention are the removal of particulate material, such as wax crystals, from a liquid stream or dispersed water droplets from lube stocks and other oils. Further possible applications of the invention are emulsion breakage, dehazing fuel oil, removal of fine particles from refinery process streams, particulate separation in coal liquefaction and oil shale processes, and removal of coagulated metal-rich fractions from residua.

One area of particular interest so far as the present invention is concerned is the separation of wax particles and/or water droplets from a hydrocarbon oil mixture boiling in the lubricating oil range, in which mixture the wax/water forms a dispersion. The term "wax particles" herein means wax in any particulate form and includes wax crystals. Furthermore, throughout this specification, it is to be understood that "hydrocarbon oil mixture" and "oil mixture" both mean a hydrocarbon oil mixture boiling in the lubricating oil range.

The problems of wax or water in lubricating oil are very well known in the art. In the distillation of crude oil, a proportion of wax is present in cuts taken in the lubricating oil range. Some of the wax remains dissolved in the oil, whereas other fractions form a haze as the oil fraction ages at ambient temperatures or below. Wax in itself is in fact a good lubricant but under comparatively low temperatures such as engine cold start conditions, its presence causes the oil to be thick and viscous and as a result the engine may be hard to turn over at sufficient speed during starting. In the case of water droplets, which include both very tiny water droplets (less than about 1 mm in diameter and exemplified by approximately 1 to 100 micron diameter droplets) and water molecules suspended in the lubricating oil, they detrimentally affect the lubricating properties of the oil and increase engine wear and corrosion. Haze manifests itself as a milky or cloudy appearance in the oil and is usually caused by either water or wax or both water and wax being present in the lubricating oil. Typically a minimum of about 50 ppm. of water or a minimum of about 0.1% by volume of wax will cause some lubricating oils to look hazy. Therefore the existence of haze caused by the presence of wax crystals or particles detrimentally affects the performance of lubricating oils. It is of paramount practical importance to devise techniques for removing dissolved wax and/or water from lubricating oil in a relatively inexpensive, simple and effective manner, which techniques are also capable of implementation on an industrial scale.

A second area of interest as far as the invention is concerned is the extraction of a polar liquid dissolved in a non-polar liquid. An example is a residuum which may be entrained and dissolved by a distillation process into a largely non-polar distillate fraction. In addition, the separation of other solutes than dissolved wax or residuum from solvent liquids generally is of practical importance and finds application throughout the petroleum and chemical industries.

It is well known that in some cases, for separating a solute from the solvent in which it is dissolved, the solution can be cooled sufficiently so that the solute is converted into a precipitate which can then be removed from the solvent in any suitable manner. In the case of a dissolved liquid, when the solution temperature is reduced below the dissolution point for that liquid, the dissolved liquid precipitates as a second liquid phase distinct from the solvent phase. For a dissolved solid, a precipitate is formed when the solution temperature falls below a critical temperature such as the melting temperature or the crystallization temperature of that solid in the solvent used. One way in which the precipitate can be separated from the solvent is to pass the precipitate-laden solvent through a filter medium or filter screen, but for this technique to be effective, the average particle size of the precipitate needs to be sufficient, such that the major proportion of the precipitate is restrained by the filter. In the case of dissolved wax in lubricating oil, in order to promote the precipitation of wax particles, an oil solvent is generally added to the wax-bearing lubricating oil (hydrocarbon oil mixture boiling in the lubricating oil range). "Oil solvent" as used throughout this specification refers to those solvents which when added to an oil mixture result in a lower viscosity for the solvent-oil mixture than for the oil mixture alone. This is beneficial for enhancing the settling or filtration processes used to separate the precipitated wax from the solvent oil mixture. Usually, the oil solvent will have the additional property of having a higher solubility for the oil mixture than for the wax at any given temperature, so that during chilling of the solvent-oil mixture to precipitate wax, the wax precipitation is enhanced. However, the resulting wax particles usually have a very small mean diameter (e.g., 0.1 to 100 μm) and special rotary drum filters have to be used, employing a filter cloth which extends around the drum periphery and through which the wax precipitate-bearing lube oil/solvent mixture is drawn under suction to form a wax deposit or cake on the filter cloth. Since the rate of filtration is directly related to the viscosity of the lube oil/oil solvent mixture, which is lower than that of the lube oil alone, the filtration rate is enhanced. Furthermore, it is known to use a vaporizable oil solvent liquid, such as liquified propane, and to allow the solvent liquid to vaporize from the lube oil so as to induce at least part of the overall chilling of the oil which brings about precipitation of the wax. However, the filterability of the resulting wax particles is inversely related to the rate of cooling so that in practice, the cooling, whether produced by the auto-refrigeration effect of vaporizing propane or other vaporizable oil solvent or in some other way such as by indirect heat exchange with a cooling medium, has to be effected at a controlled, slow rate, in order that the downstream rotary drum filter or other filter unit is able to separate the wax precipitate from the lube oil. This results in increasing treatment time in a lube oil dewaxing plant and added technical complexity.

It is also known that, in general, the mechanism of precipitation of a solute in a solvent is initiated by nucleation of the solute as the solubility for the solute is reduced. Nucleation is the formation of nuclei which themselves, when grown to a critical size, will act as sites at which agglomeration and crystallization occurs to convert the solute into crystals or particles forming the precipitate. Therefore, the onset of nucleation is critical to the precipitation of the solute in the solvent. It follows that a need exists for a method of promoting nucleation of a solute, which can lead to enhanced precipitation of the solute. Furthermore, a method for changing the nucleating mechanism, in particular the critical nucleation size, number density, nucleation rate, growth rate following nucleation and morphology of the precipitating species, can have important practical applications, not only in dissolved solid or liquid separation but also in crystal morphology.

Numerous electrical separation or electrofiltration techniques in various forms for the removal of dispersed contaminants from continuous background fluid phases are known in the art. Many of these techniques involve the application of an external electric field which, by electrophoresis or dielectrophoresis, derives the contaminant dispersion to a collection and separation region where, in the case of particulate contaminant for example, the contaminant collects and builds up on one or more collector surfaces.

It is also remarked that known separation techniques such as described above can operate quite satisfactorily in practice, but have the disadvantage that they are not particularly effective in the case of wax, water or other contaminant particle, droplet or bubble sizes below a certain level (especially of the order of submicron-size or micron-size diameter—for example about 0.1 to 100 μm). This may be due to the fact that the electrostatic force acting on each individual particle due the applied electric field becomes insufficient, when the particle or droplet size becomes sufficiently small, having regard to the viscous drag forces exerted by the oil or continuous background phase and the maximum possible charge level on the individual particles or droplets.

U.S. Patent 4,341,617 (King) uses sharply pointed projections on one electrode of a pair of oppositely charged electrodes associated with a treating chamber in an electrostatic treater for waste liquid, to concentrate the electric field at the projection tips for encouraging flocculation of impurity particles carried by the waste liquid. In another arrangement, the projection tips inject charge carriers into the waste liquid and a resulting electrical current flow is established through the waste liquid between the two electrodes. The net positive charge due to the flow of positive ions in one direction exactly equals the net negative charge due to the flow of negative ions in the opposite direction.

Reference is also directed to U.S. Patent 3,324,026 (Waterman et al) which discloses an electric filter for removing suspended contaminants from substantially water-free, high resistivity oils. The contaminated oil is flowed through the pores of individual elements of porous material forming a multielement mass filling a treating spaced between two electrodes which maintain a high-gradient unidirectional electric field in the treating space. Before the oil is passed through the multi-element mass, it may be subjected to identical discharge or blast action by a plurality of relatively sharp pointed pins of one polarity facing but spaced from a member of opposite polarity.

It is also known from U.S. Patent 3,412,002 (Hubby) to break water-in-oil emulsions electrophoretically by charging the water particles in a stream of the emulsion by physical contact with a high voltage electrode and deflecting the charged droplets laterally with respect to the stream by a transverse magnetic field.

Reference is also directed to U.S. Patent 4,255,777 (Kelly), assigned to the present assignees. This patent specifically discloses an electrostatic atomizing device and process for the formation of electrostatically charged droplets having an average diameter of less than about 1 millimeter for a liquid having a low electrical conductivity. Envisaged applications of the electrostatic atomizing technique are for spraying cleaning fluid onto the surface of an article to be cleaned, for spraying agricultural liquid, such as an insecticide, onto vegetation or soil, for spraying lubricant onto bearings and gears of large industrial machinery, for surface coating an article by spraying a solution of a plastic dissolved in a non-conductive liquid or an oil-based paint, to inject free excess charge into a molten plastic, glass or ceramic, and for spraying liquified plastic material for forming surface coatings. Another possible application is to produce charged droplets of liquid e.g. paint within a body of the same liquid which is in contact with a metal surface, so that the charged droplets deposit as a coating on the metal surface. Charged droplets of, for example, perfume could be sprayed onto oppositely charged powder, e.g. talcum powder. Yet another application is the atomization of hydrocarbon fuels, for increasing combustion efficiency. However, the Kelly patent neither discloses nor suggests trying to charge a two-phase liquid component with that charge

EP 0 179 135 B1

introduced into a continuous liquid phase transfers therefrom to the dispersed phase and that an electrophorectic effect occurs which causes migration of the dispersed phase in the liquid phase, nor even suggests any kind of application to electrical separation.

Reference is directed to U.S. Patent 4,435,261 (Mintz et al), assigned to the present assignees, which discloses a technique for the free radical polymerization of liquid monomers into thermoplastic polymers. Free excess charge is injected into the liquid monomer, so as to mitigate polymerization of the monomer into a polymer.

Reference is also made to U.S. patent 2,109,131 (Fisher) which discloses a process and apparatus for dewaxing oil, using an ionizing electric field. In contrast with the method of the present invention (defined below), the ionizer includes a plurality of spray nozzles each having an elongate body defining an enclosed space through which the oil passes, a central, coaxial elongate electrode and a nozzle opening from which the oil is sprayed from the enclosed space and impinges on a separating drum. Unlike the apparatus of the present invention (also defined below), the tip of the electrode is positioned substantially in the plane of the nozzle opening so that it is the oil which is being sprayed from the nozzle opening which is being charged and not the oil within the enclosed space.

Electrical separators are disclosed in both U.S. patent 3,129,157 (Loeckenhoff) and U.S. patent 3,489,669 (Ruhnke) in which a particle-laden liquid is passed through an electrical treater so that the particles become charged and the charged particles are collected on the inner wall surfaces of a dielectric conduit located downstream of the treater. Unlike in the method of the present invention however, the electrical treater comprises a corona point ionizer. Furthermore, in contrast with the apparatus of the present invention, in each of the aforesaid two U.S. patents the particle-laden liquid leaving the exit orifice of the corona point ionizer enters directly into the downstream conduit which is completely filled with the liquid, so that there is no gas or vapour space between the corona point ionizer and liquid in the conduit.

According to the invention from one aspect there is provided a method of separating a component which forms a dispersion in, or which is dissolved in, a continuous liquid, wherein net unipolar free charge is introduced into a quantity of the liquid completely filling a region of a vessel, the lateral peripheral boundary of said region being defined solely by the vessel wall and the vessel, at least in said region, being devoid of any collector surfaces within the interior of said region, said charge being introduced, substantially, by electron emission in the absence of ionic dissociation, which causes the continuous liquid to act as a medium through which volumetric distribution of the introduced charge takes place in said region by charge motion relative to the continuous liquid.

According to the invention from another aspect, there is provided an apparatus for performing a method as defined above, comprising:

—means for constraining said liquid to flow through an enclosed space filled by said liquid;

—an exit orifice through which the liquid leaving the enclosed space passes;

—means arranged to introduce net unipolar free charge into the liquid before the liquid enters said exit orifice;

—a vessel arranged to receive the charged liquid from said orifice and having a region for containing a quantity of said liquid, the lateral peripheral boundary of said region being defined solely by the vessel wall, said vessel, at least in said region, being devoid of any collector surfaces within the interior of said region; and

—means providing a gas or vapour space between said exit orifice and said vessel such that the charged liquid passes through said gas or vapour space as a spray or stream enveloped by gas or vapour in said gas or vapour space.

According to the invention from a third aspect there is provided an apparatus for performing a method as defined above, comprising:

—a vessel having a region for containing a quantity of said component-containing liquid, the lateral peripheral boundary of said region being defined solely by the vessel wall, said vessel, at least in said region, being devoid of any collector surfaces within the interior of said region;

—means for introducing said quantity of said liquid into said region of said vessel;

—means for constraining a charge carrier liquid which is substantially free of said component to flow through an enclosed space filled by said charge carrier liquid;

—an exit orifice through which the charge carrier liquid leaving the enclosed space passes;

—means arranged to introduce net unipolar free charge into the charge carrier liquid before the charge carrier liquid enters said exit orifice; and

—means providing a gas or vapour space between said exit orifice and said vessel such that the charged carrier liquid passes through said gas or vapour space as a spray or stream enveloped by gas or vapour in said gas or vapour space and comes into contact with said quantity of component-containing liquid in said region of said vessel.

"Conglomeration" as used throughout this specification refers to coalescence in the case of bubbles or liquid droplets of dispersed phase (contaminant) and to agglomeration in the case of solids and gels to form contaminant particles of larger size. In putting the method into effect, free charge that is net unipolar, i.e. net positive or net negative, is introduced into the mixture of continuous and dispersed phases to bring about migration of dispersed phase (such as in the form of bubbles, particles or droplets) under the influence of an interaction which occurs between the electric field, which is self-induced in the phase

5

mixture itself (comprising the dispersed and continuous phases), and the introduced charge which has transferred from the continuous phase to the dispersed phase. The free excess charge is introduced without any ionic dissociation of the continuous phase occurring, e.g. due to corona discharge. The meaning of the term "ionic dissociation" is well known in the art, but for the avoidance of doubt, refers to dissociation, whether local or catastrophic, in the continuous phase into ionized atoms or molecules when a critical threshold value of an electric field acting on the continuous phase is exceeded, resulting in the production of equal numbers of charges of both polarities. Free charge is positive or negative ions which, initially, are free to move through the continuous phase. The continuous phase acts as a medium through which volumetric distribution of the introduced charge occurs, so as to establish the induced electric field in the mixture. It is stressed that the electric field is the result not of any voltage applied to any external electrodes so as to set up an electric field between those electrodes, but rather arises from the total introduced or injected charge distribution in the continuous phase and on the dispersed phase and the collector surface regions where separation occurs.

The basis for the effective separation that can be achieved when putting this invention into effect is believed by the inventors to be as follows. The first step in the process is the production of an excess (i.e. net unipolar -positive or negative) charge density in the otherwise electrically-neutral phase mixture. Several techniques are available to produce a transient or steady-excess charge density. Broadly speaking, such methods fall into two general categories, namely: (1) injection of excess charge across the interface or boundary which confines the phase mixture, and (2) volumetric charge introduction techniques into the bulk of the phase mixture. Examples of the first category include electron beam and high energy particle radiation, photo-emission and charge transport by a moving fluid. Another example is charge injection as taught in the aforesaid Kelly U.S. Patent 4,255,777. Examples of the second category are photoionization of either or both of the dispersed phase and the continuous phase and secondary ionization by thermalization of high energy particle irradiation of the phase mixture. These examples of the second category are excluded from the method (but not apparatus) of the present invention because they involve ionic dissociation in the continuous liquid phase.

It is necessary that there be an excess of free charge in the phase mixture in the sense of a sufficient abundance that an effective migration of dispersed phase will occur. Typically, the density of the free charge would be of the order of $10^{16}$ charges per $m^3$. A lower limit would be about $1 \times 10^{10}$ charges per $m^3$. A typical preferred range of free charge density is about $1 \times 10^{13}$ to $1 \times 10^{19}$ charges per $m^3$ or even higher, for providing effective migration of the dispersed phase.

The charge introduced into the phase mixture to be clarified must be net negative or net positive. However, providing this requirement is met, then it is equally possible to introduce the excess charge using two streams of opposite but unequal levels of charge or alternating net positive and net negative streams for the purposes of dispersed phase agglomeration prior to collection, in the first case, or multilayer precipitation in the second case (e.g., collecting a net negative layer then a net positive layer, and so forth, of the dispersed phase).

The second step in the process is the transference of the major portion of the excess charge to the dispersed phase in the liquid phase. In a preferred way of performing the invention in which a charge injector, such as disclosed in the aforesaid U.S. Patent 4,255,777, is used for introducing net unipolar free excess charge into a dispersed phase laden stream, the stream issues from the charge injector as a continuous stream or spray through a gas or vapor space, and enters a separation vessel where a body of charged liquid phase mixture is collected. The gas or vapor space is provided to enable the charged fluid to exit the charge injector with high velocity to efficiently sweep out the injected charge and also to substantially eliminate any charge dissipation path back to the charge injector. Such decoupling of the separation vessel from the charge injector is important for achieving a high level and high efficiency of charge injection. It is of no particular importance to the effective removal of the contaminant whether the contaminated liquid phase is sprayed by the charge injector or simply issues as a continuous stream into the separation vessel, particularly at relatively high velocity throughputs in the charge injector. However, when the contaminated liquid phase is sprayed, the individual liquid droplets are in general separated from one another and this can be important where lower throughput velocities, closer to the drift velocity of the individual charges, are employed. It is, however, remarked that it is important that there be no contact between the charged spray or stream passing through the gas or vapor space and any surrounding wall electrically connecting the separation vessel wall to the charge injector, in order to avoid charge dissipation. Suitably, the gas or vapor space is enclosed and a purge gas, e.g., nitrogen, circulated through the space to avoid any risk of explosion or chemical reaction. In addition, the purge gas helps to obtain uniform separation results irrespective of changes in ambient conditions, especially humidity, which if present could affect the rate of depletion of charge. In the absence of any such gap, reduced separation efficiencies will result. According to a development, the gas or vapor space is pressurized which can maintain a satisfactory throughput rate in the separation vessel even for rather viscous liquids and can increase the throughput rate for less viscous liquids.

In the separation region, it is assumed that the excess charge density exceeds the liquid background charge density (i.e. the density of bipolar charge carriers which are intrinsic to the liquid and which result in the conductivity of the liquid); then the induced electric field in the separation region caused by the excess charge density will act on the individual charge carriers and drive them to the boundaries of the liquid

EP 0 179 135 B1

mixture. Some of the charge will be intercepted by the individual contaminants (droplets, particles or bubbles) of the dispersed phase and these contaminants will thereby become charged.

The next part in the process involves the interaction of the migrating contaminants in the bulk of the liquid mixture. In this case, the contaminants are present in the liquid mixture at number densities where the mean contaminant-contaminant separation is less than (e.g., 10% or less) and preferably significantly less than, the smallest of the internal dimensions of the separation vessel (e.g., its diameter, in the case of an upright cylindrical separation vessel). Agglomeration or coalescence of the contaminants will occur to form large particles, droplets or bubbles, as the case may be. The basis for this mechanism is believed to be as follows.

The contaminant particles, droplets or bubbles in general have a wide distribution of diameters and charge levels. (The following description refers to particles alone but is equally applicable to droplets and bubbles). In some cases many of the particles will be uncharged. Consequently, any individual charged particle will move in response to the macroscopic electric field produced by the distribution of free charge in the phase mixture with a non-zero relative velocity with respect to most of the other particles. Thus, a moving charged particle may be expected to undergo collisions with both charged and uncharged particles during its transit towards the boundary of the liquid mixture, providing the distance to the boundary sufficiently exceeds the distance to the next nearest particle and even though the charges on the particles are of the same polarity. The collision cross-section for the case of a charged and uncharged particle is higher than the collision cross-section for two uncharged particles since the charged particle induces a dipole moment in the uncharged particle as the distance between them diminishes during the interval leading up to the collision. Thus, attractive force exists and becomes stronger as the particles approach each other. The collision rate for a charged particle in a background of uncharged particles is the product of collision cross-section and the relative velocity.

In the case that a charged particle moves towards a second charged particle charged to the same polarity, and for purpose of explanation the second charge is of lower magnitude than the first charge and the contaminant sizes are equal and the electric fields that both charged particles experience is the same, then the force between the two similarly charged particles will be attractive if the product of the electric field and the square of the sum of the particles radii exceeds the product of the two charges divided by the difference between the magnitudes of those two charges.

In both cases, upon collision the charge may be shared by both collision partners. If the resulting electrical repulsion between the similarly charged, contacting particles and the fluid shear forces which are exerted upon them are less than the surface adhesion forces, the conglomerate will be stable and charged. In the case of dispersed liquid droplets, as in a water-in-oil emulsion, coalescence into a single larger charged drop may occur. The agglomeration and coalescence may continue until each droplet either reaches the boundary of the liquid mixture or increases in size until it becomes separated from the bulk of the liquid mixture by conventional methods such as centrifugation, settling, or mechanical filtering. For dispersed liquid droplets this will conveniently entail settling (or flotation, depending upon the density of the contaminant phase relative to that of the liquid) of the re-entrained liquid droplets, to form a distinct continuous contaminant phase, to enable separation of the two liquid phases. Where the contaminant is a gas, the bubbles eventually grow to a size where they become released, due to factors such as buoyancy, and can be allowed merely to rise to the surface of the background liquid phase and be collected there or allowed to escape into the atmosphere. Where the contaminant is a solid, migrating contaminant particles can form into agglomerates due to Van der Waal's physical cohesive force, quite apart from any other adhesive forces attributable to the particular contaminant concerned, and a precipitate of contaminant conglomerates will build-up on the bottom of the separation vessel. There may also be a more limited deposition of contaminant on the inner lateral wall surfaces of the separation vessel. Periodic cleaning of the fouled surfaces by backflushing, solvent washing, heating or other techniques will remove the deposited contaminant.

The separation vessel has a primary conglomerating region which is free of internal collector surfaces within the phase mixture inside the separation vessel. Furthermore, the separation vessel has internal dimensions which are larger, and preferably significantly larger (e.g., 100 times or more) than the mean intercontaminant spacing for the contaminant dispersion within the phase mixture, such that at least some conglomeration of the migrating contaminant phase will occur within the phase mixture in the primary conglomerating region of the separation vessel to a sufficient degree that conglomerated contaminant phase is brought out of suspension in the phase mixture. "Mean inter-contaminant spacing" denotes the arithmetic mean value before any migration of the contaminants, following the introduction of free charge, starts to occur. Depending on the nature of the contaminant, the conglomerate will come out of suspension either as bubbles which rise to the surface of the phase mixture or as droplets or gel-like globules or conglomerated particles which will either rise or, more usually, settle, according to the relative densities of the contaminant phase and the liquid with which it is in contact.

Where there are present mixed dispersed phases such as bubbles and solid precipitates, for example, the bubbles may be driven into contact with the solids and vice versa. The bubble-solid composite contaminant thus formed may rise to the surface by buoyancy forces and form a particulate-laden foam or froth which may conveniently be skimmed from the bulk of the liquid and the solids thereby separated from the liquid. Clearly, other possibilities and combinations exist.

7

It will be appreciated that the viscosity and conductivity of the background phase need to be sufficiently low such that conglomeration can occur to a sufficient degree that the contaminant can be removed in a suitable manner as mentioned above before any appreciable leakage or depletion of its charge can take place such as would diminish to an ineffective level the electrical migration force acting on the contaminant. Typically, the product of the viscosity and conductivity of the continuous liquid phase would not exceed $10^{-7}$ centipoise/ohm-meter ($10^{-7}$ mPa · s/ohm-meter).

It is to be noted that when using a charge injector to introduce the net unipolar free charge, it is important that the stream velocity through the charge injector is high enough to transport the charged stream away from the electrode region of the charge injector. Ideally, the stream velocity needs to exceed the drift velocity of the individual charges relative to the liquid induced by the electric field produced by the charge injector electrodes. On the other hand, the liquid in the separation vessel needs to remain there long enough to enable contaminant conglomeration and particle/droplet/bubble enlargement to take place. This generally requires a much lower velocity throughput in the separation vessel than in the charge injector. Typical values for the throughput velocities in the charge injector and separation vessel are 1 m/sec and 0.05 to 1 cm/sec, respectively. In another embodiment its internal cross-sectional diameters of the separation vessel and the injector orifice diameter are, for example, 5 to 10 cm and 0.025 cm, respectively. These are purely exemplary and have no limiting character.

Taking the concept of the present invention to its limit, it will be appreciated that providing the primary conglomerating region within the separation vessel is made large enough and that sufficient charge is injected with regard to the density of the contaminant phase and the viscosity and conductivity of the continuous liquid phase, all or substantially all of the contaminant phase will come out of suspension and either bubble off or separate out as a distinct layer of contaminant phase without any contact with the wall surfaces bounding the primary conglomerating region. This can be advantageous in that there is then no need to have to clean contaminant fouling from the wall surfaces bounding the primary conglomerating region. Normally, however, some of the contaminant phase may migrate into contact with the inner wall surfaces of the separation vessel and conglomerate there. Solid and gel-like contaminant particles will tend to deposit on those wall surfaces, whereas gaseous and liquid continuously will usually separate out as bubbles or settling droplets.

In accordance with a preferred way of performing the invention, when separating-out a dispersed liquid contaminant phase from a continuous liquid phase, the contaminant phase being of higher density, the conglomerated contaminant phase, which separates-out as droplets from the phase mixture in the primary conglomerating region of the separation vessel under gravity, sinks to a secondary conglomerating region, located below the primary conglomerating region. This secondary region comprises a multiplicity of exposed collector surfaces within the phase mixture, so that further coalescence of the contaminant droplets will occur on those exposed collector surfaces. In other words, a certain degree of droplet size growth is achieved in the primary conglomerating region and this growth is continued further in the secondary conglomerating region while in contact with the exposed collector surfaces, whereby the fully grown droplets developed in the secondary conglomerating region can settle out readily under gravity to form a distinct layer of contaminant phase in the bottom of the separation vessel. Suitably, the collector surfaces in the secondary conglomerating region are provided by a bed of closely packed beads of a material which has low conductivity and may be non-porous or porous.

The primary conglomerating region may be designed so that all of the excess charge is contained within this region and there is no excess charge in the secondary region. Hence, the configuration of the collector surfaces and their material of construction may be chosen so as to optimize settling of the liquid droplets. Means for accomplishing this are well known to those skilled in the art.

It is to be noted that the collector surfaces need not necessarily be stationary. For example, the stream of liquid in which conglomeration of the contaminants has occurred issuing from the primary conglomeration section could be seeded with collector beads before the stream enters the secondary conglomeration section of the separation vessel and the beads removed from the liquid again at a downstream location. For this purpose, the secondary conglomeration region could be provided with a bead inlet near the top and a bead outlet at the bottom. Alternatively, the bed of beads comprising the secondary conglomeration section can be fluidized. One way in which this can be achieved in using a concentric cylinder arrangement for the separation vessel with the beads at least partially filling the annular gap between the two cylinders and pressurizing the gas space above the separation vessel to drive the charged liquid inside the inner cylinder into the annular space from below.

With the present invention, it is possible to provide an apparatus and method for the effective separation of dispersed phase from a continuous liquid phase, especially where the mean contaminant size is very small (e.g., of the order of 0.1 to 100 µm in diameter).

The contaminant separation apparatus can be made to be simple in construction and reliable in operation, whilst a contaminant separation method can be provided which is simple to put into effect. With the invention it is possible to attain a high level of purity of the clarified continuous phase.

It will be appreciated that the invention is not limited to separating a single contaminant from the mixture. Two or more contaminant species may be separated, providing each of them forms, or the contaminant phases are combined to form, a dispersed phase within the background fluid phase.

According to a development of the concepts described above, where the contaminant is dissolved in the continuous liquid phase or even where the contaminant is in the form of a dispersion of fine droplets or particles, in additive may be added to the contaminated liquid phase which combines with the contaminant to form a dispersion in the continuous liquid. That dispersion can then be separated according to the techniques described above.

Most suitably, the additive will combine with the contaminant physically or chemically. For example, it is preferred that the additive have sorbent properties, in particular adsorbent properties. A preferred application is the separation of a dissolved contaminant from a liquid, in which case the additive may comprise finely divided solid particles of sorbent material. Alternatively, it is feasible for the additive to be selected so that it will combine electrically with the contaminant, e.g., by electrostatic attraction.

A preferred application of the invention is the separation of wax and water from lube oil. For wax particles and water droplets, these can be separated from the lube oil by techniques as described above. Where the wax is present as dissolved wax, the lube oil needs to be cooled to precipitate the dissolved wax as wax particles. The wax precipitation may be assisted by mixing an oil solvent with the lubricating oil. "Oil solvent" has already been defined hereinabove. Liquefied hydrocarbon alkanes or alkenes, ketones, toluene or other aliphatics, and light organic chlorides are examples of well-known oil solvents. When the wax-laden oil is cooled, then as the temperature of the oil is reduced, different wax fractions start to come out of solution, aided by the oil solvent. Propane is an example of a preferred oil solvent because in addition to its oil solvent properties it boils or vaporizes at typically encountered conditions of temperature and pressure in propane dewaxing processes, and this, in turn, leads to an auto-refrigeration effect which can be used to bring about the desired cooling, at least in part, of the wax-laden oil. This, in some instances, obviates the need for a refrigerating or chiller unit in which the oil mixture is cooled by indirect heat exchange with a cooling medium, or in others reduces the refrigeration capacity requirement of the refrigeration or chiller unit.

An oil solvent can be used as a carrier liquid for the injected charge, the charged oil solvent carrier liquid being added to the uncharged oil mixture. Preferred oil solvents for separating wax from a hydrocarbon oil mixture include liquid propane or any liquid hexane, alkane or alkene whose molecular weight is between 16 and 114, or any other oil solvent whose electrical conductivity is less than about $10^{-8}$ $(ohm \cdot m)^{-1}$. Preferably, the temperature of the wax-containing oil mixture is in the range of 140°F (60°C) to 200°F (93.3°C) before it is mixed with the oil solvent liquid whose temperature is in the range of 60°F (15.6°C) to 200°F (93.3°C). These temperature ranges help to ensure that the oil solvent dissolves thoroughly and readily in the oil mixture.

Other ways exist to alter the solubility of the wax in the oil mixture. To wax-containing oil mixture already diluted with an oil solvent liquid can be added a liquid additive which alters the chemical or physical state of the solvent by chemical reaction between the additive and solvent or, where the additive is a solvent absorber, by the selective absorption of the solvent by the additive. A second example is to utilize the vapor pressure of the oil mixture such as by venting or drawing vacuum. Alternatively, oil solvent vapor in the gas or vapor atmosphere above a body of oil solvent/lube oil can be selectively removed from the atmosphere to bring about wax precipitation.

One aspect of the invention is the pretreatment of the oil mixture for precipitating any dissolved wax and for effecting wax particle agglomeration and wax particle size growth, whereby the larger wax particles are of a sufficient size that they can be separated from the oil mixture by any simple or known way, such as by a mechanical filter such as a filter medium, e.g., a filter screen, or a rotary filter such as a rotary drum filter. Alternatively, the pretreated wax-containing oil mixture and a wax collector surface can be brought into contact with one another so that wax particles deposit on the collection surface, for separation from the oil mixture.

For achieving the wax precipitation and growth, two method steps have to be performed. One is that free excess electric charge which is net unipolar, i.e., net positive or net negative, has to be introduced into the wax-containing oil mixture. The charge can conveniently be introduced by charge injection. The second required step is that the solubility for the wax is reduced, so as to cause dissolved wax in the oil to form a dispersion of wax particles in the oil mixture. The solubility reduction and charge introduction steps can be carried out in either order, or at the same time. Specifically, both steps will usually be carried out simultaneously. Where the solubility reduction is achieved by, for example, cooling the solution, the cooling will cause the temperature of the solution to fall progressively until, eventually, a dispersion of precipitated wax particles will form in the oil mixture. Another possibility is to reduce the solubility for the wax in the oil mixture, initially without introduction of free excess charge, at least until wax particles just start to form in the oil mixture, and then with or without further solubility reduction, free excess charge is introduced into the solution so as to cause the already formed wax particles to agglomerate and grow into larger wax agglomerates or particles, as will be described in more detail hereinbelow. In principle, the converse situation is possible, namely, to charge the wax-containing oil mixture with free excess charge, with or without a solubility reduction, and then to complete the solubility reduction, in the absence of any further introduction of free excess charge, at least until wax particles just start to form in the oil mixture. One practical difficulty with this particular possibility is that once no further free excess charge is introduced the free excess charge will tend to leak to earth and it would then be necessary for the solubility reduction to be sufficiently rapid that at least initial formation of wax particles has occurred before a significant proportion of the charge has leaked away. In practice, this result may be difficult to achieve.

However, where, for example, the introduced charge has a pulsed periodic waveform of relatively high frequency comprising a pulse of one polarity and a zero amplitude portion over each cycle of the waveform, then wax particle formation followed by growth/agglomeration will still occur even when a zero amplitude portion of the waveform coincides with the initial crystal formation.

It is to be noted that wax and lube oil are chemically similar but have differing molecular weights. To facilitate precipitation of dissolved wax, an additive may be used, such as high molecular weight hydrocarbon, containing an amine group.

One preferred way of precipitating dissolved wax from lube oil would be to cool a mixture of, say, propane and waxy oil to its cloud point, and then add a second solvent, say, methyl ethyl ketone (MEK) to the propane/wax/oil solution, which second solvent lowers the solubility of the wax in the solution. The MEK will cause wax to come out of solution with no further cooling. Finally, charge is injected to produce wax particle agglomeration and growth.

It will be appreciated that the described separation method is not limited to separating either wax or water from the lube oil mixture. They can usually both be removed from the lube oil at the same time. Furthermore, the separation method is not selective for removing only wax and water from lubricating oil, but will also be effective for separating other contaminant particles such as grit, catalyst fines, asphaltene particles, oxide scale, corrosion scale and other corrosion products, coke fines and the like which may also be present with the wax, either singularly or in some combination.

According to a preferred way of performing the invention, the wax/water-laden lube oil mixture may be subjected to the electrical treatment described above, using a separation vessel whose interior is devoid of any internal wax/water collector surfaces or beads. In the separation vessel, therefore, wax particles and/or water droplets will agglomerate and coalesce to form larger agglomerations of wax and larger water droplets. The residence time of the charged lube oil in the separation vessel, the injected charge level, and the internal dimensions of the separation vessel, are all selected such as to produce the required degree of wax particle/water droplet growth in the separation vessel. Following this electrical pretreatment in the separation vessel, lube oil from the separation vessel, containing grown wax particle agglomerates and/or grown water droplets, is then passed through a filtration apparatus which can, for example, be a gravity settler or, in the case of wax, a filter screen. It will be appreciated, therefore, that the extent of particle/droplet growth required in the separation vessel must be sufficient according to the filtration capability of the filtration apparatus.

As mentioned above, another aspect of the present invention is concerned with promoting nucleation of a solute dissolved in a solvent, during the separation of the solute. The solute comprises a solid or liquid dissolved in the solvent, which itself is a liquid. The method of the present invention requires that two steps be carried out. One step is to introduce free excess charge which is net unipolar into the solution. The charge is introduced substantially by electron emission in the absence of ionic dissociation. Free excess charge is positive or negative ions which, initially, are free to move through the solution. The solution acts as a medium through which volumetric distribution of the introduced charge occurs. The other step is to reduce the solubility of the solute in the solvent. The invention further requires that at least one of these steps must be carried out at least until nucleation of the solute occurs in the charged solution. Usually, both steps will be continuously carried out simultaneously. Where the solubility reduction is achieved by, for example, cooling the solution, the cooling will cause the temperature of the solution to fall progressively until, at a critical temperature dependent upon the level of introduced free excess charge, the onset of nucleation will occur. Another possibility is to reduce the solubility of the solution, initially without introduction of free excess charge, to a solubility just above that at which, in the absence of free excess charge introduction, nucleation would be initiated. Then, with or without further solubility reduction, free excess charge is introduced into the solution and providing the charge level is adequate, nucleation will start to occur. In principle, the converse situation is possible, namely, to charge the solution with free excess charge, with or without a solubility reduction, and then to complete the solubility reduction, in the absence of any further introduction of free excess charge, to a point at which onset of nucleation occurs. One practical difficulty with this particular possibility is that once no further free excess charge is introduced, the free excess charge in the solution will tend to leak to earth and it would then be necessary for the solubility reduction of the solution to be sufficiently rapid that nucleation has taken place before a significant proportion of the charge has leaked away. In practice, this result may be difficult to achieve with many solutions. However, where, for example, the introduced charge has a pulsed periodic waveform of relatively high frequency comprising a pulse of one polarity and a zero amplitude portion over each cycle of the waveform, then nucleation of the solute is believed to be promoted even when a zero amplitude portion of the waveform coincides with the initiation of nucleation.

For promoting nucleation of the solute, similar considerations in regard to the way in which the free charge is introduced and the amount of introduced charge which is required apply as in the case where the dispersed phase particle/droplet/bubble size is increased by the methods as described hereinabove. Therefore, these considerations need not now be discussed. However, it is mentioned that the inventors believe that the presence of the free excess charge acts on a nucleating species to create stress or pressure at the nucleation surface, as well as to create motion of the species involved, thus altering the microphysical processes which occur. The motion arises due to the fact that the excess charge, volumetrically distributed in the solution, will generate an induced electric field in the solution which interacts with the charge, resulting in movement of the charge toward outer boundaries of the bulk solution. Some of the charge will be intercepted by and remain with "charge trapping" molecules or second phase inclusions. As a result, these species will become charged and then forced to begin moving within the solution. A means of draining charge from the solution may be included to control overall charge level and charge distribution. A grounded wire or network of wires with a selectable resistance to ground would provide a grid electrode for achieving such control.

Various techniques exist for effecting the required reduction in the solubility or the solute in the solvent. A preferred technique, referred to briefly in the preceding paragraph, is to cool the solution. An area of considerable practical importance is the nucleation and precipitation of dissolved wax in lube oil, for example, in a wax separation process. Cooling the waxy lube oil will result in wax nucleation and precipitation. An alternative or additional technique is to add a liquid additive to the solution to form an admixture, the liquid additive having the property of preferentially dissolving the solvent so as to allow the solute to precipitate as the solution is cooled. Suitably, the liquid additive is a vaporizable liquid which vaporizes from the liquid additive/solution admixture so as to produce the required cooling of the solution, at least in part. One possibility is to add more solute, whereas another is to add a second solvent which has a lower solubility for the solute than the first solvent. A preferred application of the invention is the separation of dissolved wax from a hydrocarbon oil mixture boiling in the lubricating oil range. In that case, the vaporizable liquid additive can be liquified propane or other oil solvent such as described above. Another preferred method would be to cool a mixture of, say, propane and waxy oil to its cloud point, then inject charge to promote further nucleation of wax and add a second solvent, say methyl ethyl ketone (MEK), to the propane/oil/wax solution, which second solvent lowers the solubility of the wax in the solution. The MEK will cause wax to precipitate as wax particles with no further cooling. Alternatively, or in addition to the use of a vaporizable oil solvent, the cooling may be effected by indirect heat exchange with a cooling medium. Other ways exist to alter the solubility of the solute in the solvent and have already been referred to herein, in the specific area of lube oil dewaxing, when describing how to precipitate dissolved wax in the lube oil.

If the solute is chemically dissimilar to the solvent (e.g., a dissolved polar solute and a non-polar solvent) then introduced free excess charge migrating through the solution will experience a larger affinity for attachment to the polar solvent. Therefore, free excess charge introduction into a solution comprising a dissolved polar solute in a non-polar solution is effective to promote nucleation and precipitation of the polar solute. Where, however, the solvent and solute are chemically similar (as in the case of wax dissolved in lube oil, for example), introduced free excess charge may have an approximately equal affinity for both the solute and the solvent and, therefore, may not be expected to have an appreciable effect on promoting nucleation and precipitation of the dissolved solute. In order to impart a greater affinity for free excess charge to the solute than the solvent in this case, a liquid additive may be added having the property that it preferentially combines chemically or physically with the solute while providing an affinity for the free excess charge. For example, the additive may comprise "charge trapping" molecules which chemically react preferentially with the solute (that is, the species which is to nucleate and precipitate), and provides the solute with a greater affinity for free excess charge than is otherwise established by the solute. In the case of wax dissolved in lube oil, the wax and lube oil are chemically similar but have differing molecular weights. To facilitate nucleation and precipitation of the dissolved wax, an additive may be used such as high molecular weight hydrocarbon, containing an amine group.

The inventors believe that the effect of the charge on the nucleation process may be understood from a fundamental point of view by realizing that the interaction of solute molecules or clusters of solute molecules are normally short range; that is to say, the solute molecules or clusters interact as simple uncharged spheres unless their separation is of molecular dimensions. Under given conditions of thermodynamic variables (such as pressure and temperature) the average rate of collisions of solute molecules will be governed by the strength of these interactions. Statistically, within the volume at any instant of time, there will be a distribution of the number of solute molecules in collision (i.e., $N_0$ binary collisions, $N_1$ ternary collisions, . . .). When a critical number of molecules or clusters collide the energy of the interaction changes such that if a number greater than the critical number collide, the collision complex is stable and grows, while if a number less than the critical number collide, the collision complex is unstable and dissociates. The size of this collision complex is called the critical size for nucleation.

If one or more of the colliding species is charged, then the interaction is more long range and greater in strength. Therefore, the rate and energy of interaction of molecules or clusters below the critical size (as obtained with no free excess charge added) is increased and the overall rate of nucleation is enhanced. In fact, the critical size for nucleation is reduced.

The inventors further believe that charge deposition on substantial nuclei directly alters the energy of the cluster as can be seen by considering a model that has been developed for liquid nucleation from a gas phase. This model relates the rate of nucleation to the equilibrium concentration of clusters which are at a critical size corresponding to a condition of minimum free energy. Any further addition of species to this critical embryo results in a free energy decrease with an attendant high probability of growth to macroscopic size. Viewing the nucleus as a spherical liquid drop, classical theory relates the free energy of formation to the macroscopic surface tension of the bulk solvent and its volume-free energy. Although this model breaks down if the critical nucleus contains only a few molecules, it provides a first description of the nucleation process. In terms of the macroscopic surface tension ($\delta$) of the bulk liquids the critical nucleus size ($r_c$), number density ($n_c$), and nucleation rate ($R_c$) can be expressed as follows:

$$r_c \sim \delta \qquad (1)$$

$$n_c \sim \delta^3 \qquad (2)$$

$$R_c \sim \delta^{3/2} \exp. (-A^3) \qquad (3),$$

where A is a constant. The effect of free charge can be modelled by its influence on the surface tension $\delta$, of the solvent as follows:

$$\delta = \delta_o - Q_s^2/(8\pi)^2 \varepsilon_o r^3 \qquad (4)$$

where
$\delta_o$=surface tension of an uncharged spherical drop;
$Q_s$=surface charge of drop
r=drop radius
$\varepsilon_o$=permittivity of free space

The effect of free charge of either sign results in a reduction of surface tension (this effect can be dramatic to the point of drop disruption when the net surface tension becomes zero). A small change in surface tension very strongly influences the nucleation rate, as well as altering the critical embryo size and number density. For example, calculations show that in some cases a 10% change in $\delta$ can result in a ten order of magnitude change in nucleation rate.

If growth rate is limited by the rate at which nucleating phase diffuses to the nucleus, then nucleation and growth will also be influenced by movement of the nucleus through the liquid. The movement will reduce the diffusional growth rate limitation by altering the concentration gradient boundary layer surrounding the growing phase. Electrohydrodynamically induced motion due to the presence of the free excess charge may provide the necessary convective motion of the nucleus to reduce the diffusion limitation.

Charge induced movement will also promote growth by increasing the probability for collision between nucleated species. Movement of charged species will depend on the forces due to the species charge level and the opposing forces of viscous drag. Since nucleated species will have different charge levels and radii, a distribution of velocities is expected. The probability of collisional growth by nuclei impaction (even in the presence of charge of one sign) will be significantly increased. Collisional growth rate will also be further promoted by the re-entrainment of nucleated species from a charge dissipating surface (such as the grid electrode mentioned above) which acts as a source of neutralized species. These neutralized species will not experience any direct force due to the charge-generated field until they again accumulate charge. In the meantime they will be concentrated near the charge-dissipating surface and will increase the probability for collision, with a charged species moving toward this surface.

Nuclei and precipitate morphology would be influenced by charge deposition on the growing phase. Charged crystals, for example, would be subjected to interaction forces that would cause specific orientations to occur and prevent other orientations prior to collisional growth or fusion of adjacent crystals. Charged sites would also act like crystal dislocations, thus forcing an alteration in depositional growth from that normally experienced in the absence of charge. Essentially, two-dimensional growth patterns could, for example, be forced to become more three-dimensional in nature.

In the separation of the solute from the solvent, the method is continued beyond the point at which nucleation of the solute takes place and lasts until the solute is converted into a dispersed phase or precipitate in the solvent. The precipitate can then be separated by suitable separation techniques such as gravity settling or filtration using a filter screen or filter medium.

The foregoing and other advantages and benefits of the invention will become apparent from the following description given, by way of example, with reference to the accompanying drawings, in which:

Figure 1 shows, diagrammatically, a vertical section through one form of separation apparatus in accordance with the invention, adapted for breaking of a water-in-lube oil emulsion, and for removing wax;

Figures 2 and 3 are corresponding views of second and third embodiments;

Figure 4 is a schematic side view of a fourth embodiment employing batch chillers of essentially known construction, but modified to include electrical charge injectors;

Figure 5 is a detailed vertical sectional view through a charge injector incorporated in one of the batch chillers shown in Figure 4;

Figure 6 represents an experimental form of wax separation apparatus which is similar to that of Figure 3 but additionally comprises a cooling jacket;

Figure 7 is a graph demonstrating the wax particle agglomeration and growth which occurs in the case of a white mineral oil contaminated with wax crystals, when treated having similar apparatus to that of Figure 1 except that no beads were present;

Figure 8 and 9 present experimental data, using the apparatus of Figure 6, but with its settler omitted, illustrating removal of low concentration contaminants, possibly including wax, due to charge injection;

12

Figures 10 to 12 show further experimental data which demonstrate the effect of charge injection on growth and in-situ separation of wax crystals by virtue of the control and lowering of turbidity values as compared with the corresponding case where no charge injection is employed;

Figures 13 to 15 are graphs presenting further experimental data obtained with the apparatus of Figure 6 (including settler), which shows the ability of a coarse (32 mesh) downstream filter/settler to be effective in removing wax when charge injection is used; and

Figures 16 and 17 illustrate the crystal morphologies resulting from progressively cooling a lube oil/hexane mixture, initially containing dissolved wax, down to room temperature in the case where there was no charge injection and where charge injection was effected throughout the cooling, respectively.

In the Figures, the same references denote the same or corresponding parts.

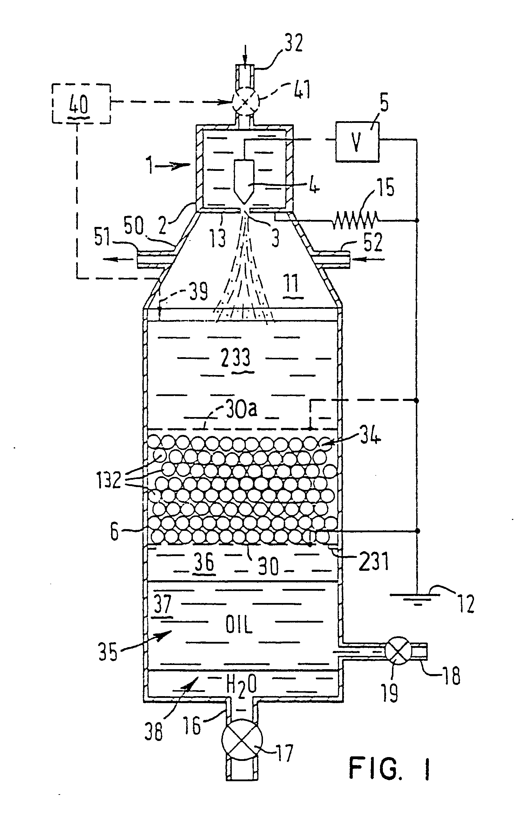

Figure 1 shows a vertical sectional view through one form of electrofilter in accordance with the invention which is capable of separating wax particles/crystals and fine water droplets suspended in a lubricating oil. Initially, for convenience, the removal of water droplets from the oil will be described. This description will be followed by an explanation of how the electrofilter separates wax particles and crystals from the lubricating oil.

In Figure 1, water-in-oil emulsion is introduced through line 32 into the inlet of a charge injector 1 which injects free charge which is net positive or net negative into the oil/water mixture. However, it is to be understood that, alternatively, two streams of opposite charge or alternating net positive and net negative streams may be used instead, providing the net charge introduced is net positive or net negative.

Suitably, the charge injector 1 is constructed in accordance with the teaching of the aforesaid Kelly U.S. Patent 4,255,777 to which reference is directed for a more complete disclosure of the construction and operation of the charge injector. However, in substance, such a charge injector, as shown, essentially comprises an upright, suitably cylindrical, chamber 2 through which the mixture passes, having a bottom wall 13, including a central orifice or opening 3 and a sharply pointed electrode 4, mounted inside chamber 2 and connected to the high potential terminal of voltage power supply 5 whose earth terminal is grounded at 12, the tip of the electrode 4 being located closely above, and in axial alignment with, the opening 3. The chamber bottom wall 13 serves as a second electrode which is maintained at a lower voltage, relative to earth, than pointed electrode 4, by means of a connection to earth 12. This connection may be made through a resistance element 15. Charge is injected by the pointed electrode 4 into the water-in-oil emulsion issuing through the opening 3 and the charged emulsion issues or sprays, through a gas or vapor space 11, into an upright vessel or reservoir 6 located below the charge injector 1. As shown, gas or vapor space 11 is enclosed by a frusto-conical shaped cap 50 of the separation vessel, on which the charge injector body is mounted, and the space 11 is open to the atmosphere through pipe 51. Alternatively, in order to avoid risk of explosion or chemical reaction, the separation vessel may be sealed and a purge gas may be circulated through the vapor space using inlet and outlet pipes 52, 51. In another arrangement, gas space 11 is pressurized from an external source (not shown). A horizontally arranged metallic gauze 30 located within vessel 6 approximately half-way up its height on an internal supporting shoulder 231 is also connected to earth 12 and completes the electrical circuit of the charge injector. A bed of densely packed collector beads 132, for example glass beads, rests on the gauze 30 and occupies approximately half of the volume within vessel 6 above the gauze. An alternative location for the gauze electrode is when it covers the collector beads 132, as shown at 30a in Figure 1. In this arrangement, other means for supporting the bed of collector beads 132 would need to be provided.

The separation vessel interior comprises, working from the top downwards, an uppermost section 233 which is free of any collector surfaces apart from the internal wall regions of vessel 6 and which constitutes a primary conglomerating region, the section 34 which is occupied by the beads 132 and which serves as a secondary conglomerating region, and separation region 35 in which the emulsion breaks up into a water-in-oil layer 36, an oil layer 37 and a water layer 38, as will be described in more detail below. The smallest dimension of the uppermost section 233 should preferably be at least 100 times greater than the initial average distance between individual water droplets, but this requirement is not essential. The beads suitably are glass beads, but they may instead be made of other materials of low conductivity, e.g. plastics or ceramics generally. The beads need to have low conductivity, in all arrangements, such as provided by gauze 30 in Figure 1, in which a low conductivity path exists from the beads to earth, in order that they do not conduct away the electrical charges in the separation vessel 6 too quickly, as otherwise inadequate or ineffective electrical separation will result.

It is to be noted that if there were no primary coalescing region provided by section 233 devoid of any beads, separation of the contaminant might not in every case (e.g. water-in-oil emulsions) be wholly effective with very small droplets, but this drawback is overcome in the present embodiment because the primary coalescing region 233 grows the water droplets to a sufficient size that effective separation can occur in the bead separation region 34.

The stream issuing downwardly through opening 3 may break into a spray at a short distance below the opening in air gap 11, depending on the charging potential of the charge injector, but the existence of a spray is not critical to the effective operation of the separation apparatus. The separation vessel 6 is provided in the bottom thereof with an outlet pipe 16, including a valve 17, for discharging separated water from the separation vessel. Similarly, the vessel 6 has in its side wall an outlet pipe 18, including a valve 19, located above the oil/water interface, for releasing clarified lube oil from vessel 6.

# EP 0 179 135 B1

It is to be noted that because of the very large cross-sectional area of the interior of vessel 6 as compared with that of the stream of charged phase mixture emerging through outlet 3, the stream velocity through the charge injector 1 is relatively high, so as to ensure an adequate level of charge injection, whereas the downward velocity of the body of liquid in vessel 6 is very small or, expressed another way, the residence time in the separation vessel is comparatively long. The residence time has to be sufficiently long that the injected electric charge has enough time to act to cause the water to be separated from the lube oil. Typical dimensions for the internal cross-sectional diameter of the separation vessel and the spray outlet diameter are 10 cm and 0.005 cm respectively.

In operation, with valves 17 and 19 set to determine flow rates for clarified water and oil which match the flow rate through charge injector 1, or by selective periodic opening and closing valves 17, 19 so as to maintain the body of liquid in vessel 6 at an approximately constant level close to the top of the separation vessel, excess charge carriers are induced to be emitted from the sharply pointed end of electrode 4 when this electrode is maintained at a sufficiently high negative potential with respect to spray opening 3. The charge carriers are then swept from the pointed electrode 4 by the cross flow of the water-in-oil emulsion to be clarified issuing through the orifice 3 and conveyed into the separation vessel by the emulsion stream or spray issuing from the charge injector 1. Within upper region 233, the major portion of the injected charge has transferred to the water droplets, so as to drive the droplets towards the bounding wall surfaces of separation vessel 6. Ideally, the internal dimensions of separation vessel in region 233 are chosen to be much larger (typically 100 times or more) than the mean inter-droplet spacing within the continuous oil phase. In this way coalescence of the migrating water droplets will occur for most of the water droplets within region 233 before the droplets reach the internal wall surfaces of the separation vessel, and larger water droplets are thus formed. Other droplets will reach the inner wall surfaces of the separation vessel and coalesce there, to form larger droplets which break away from the wall surfaces, or a surface water film may be formed on the separation vessel wall to promote settling of the water contaminant. The larger droplets as formed in both ways start to settle, due to the effects of gravity and downward flow within separation vessel 6, the downward settling being superimposed on the droplet migration on the generally radial direction, and the settling droplets accordingly encounter the collector beads 132 in section 34, on whose exposed surfaces the droplets coalesce further until they are large and become detached from the bead surfaces and separate out by gravity settling to form the bottom, water layer 38. It will be appreciated that the close packing of the beads provides very short migration paths for the droplets in the secondary conglomerating region, to enhance water separation. The oil from which the water droplets have been removed tends to separate out into oil layer 37 floating on top of water layer 38, water-in-oil emulsion occupying the remainder of the volume taken up by the body of liquid in vessel 6 and which fills section 233, the interstices between the beads, and water/oil layer 36. Where valves 17, 19 are set to define predetermined flow discharge rates for the clarified water and oil phases, an optional level control arrangement can be used to keep the level of charged water-in-oil emulsion in section 233 substantially constant, this arrangement comprising a controller 40 which responds to the level detected by a lavel sensor, diagrammatically designated at 39, and controls the opening of a regulator 41 in the input line 32 to the charge injector 1 so as to reduce any error between the output from level sensor 39 and an input signal representing the desired level.

When the lubricating oil contains wax particles or crystals instead of water haze or droplets, the separation mechanism is essentially the same except that the wax deposits on the bead surfaces and within the interstitial spaces between the collector beads in the central region 34 of the separation vessel, instead of collecting at the bottom of the separation vessel. Therefore, in the primary conglomerating region 33, just as for the water droplets, wax particles which have acquired an electrical charge due to the charge injection start to migrate within the lube oil phase as a result of the electrophoretic interaction between the charged wax particles and the self-induced electric field acting within the oily mixture in the primary conglomerating region 233. Due to the electrophoretic migration, wax particles collide with one another and unite to form wax particle agglomerations. In this way, wax particle or crystal growth occurs in the primary conglomerating region 233 and, with time, these grown wax particles encounter the separation beads 132 in the central region 34 where the particles form deposits and accumulate. Lube oil which has passed through the central region 34 and into the lower region 35 is accordingly relatively wax-free and can be discharged periodically or continuously as required.

In order to effect the separation of dissolved wax in the lube oil, firstly, an oil solvent liquid can be mixed with the wax-laden oil to be treated electrically, for example by adding a stream of such oil solvent liquid to the stream of waxy oil in line 32, and secondly, the solvent-diluted oil is cooled, for example in a flash drum, so as to precipitate dissolved wax before the solvent-diluted oil is introduced into the charge injector. The electrical treatment described above will then be operative for acting on those precipitated wax particles to effect their separation from the lube oil phase, as described hereinabove. An example of such an oil solvent is liquid hexane. Another example is liquid propane which does have an additional benefit over hexane where it is caused to vaporize and in so doing, cools the waxy oil to further encourage precipitation of dissolved wax. In cases where such an oil-solvent liquid additive is used, whether or not for the added reason of chilling the waxy-oil, the liquid additive needs to be recovered from the substantially wax-free lube oil phase, discharged from the electrofiltration apparatus, but techniques for removing the liquid additive are well known in the art and need not be further described herein.

14

After significant wax deposits have built-up in the bed of packed beads, the separation effectiveness of the beads will diminish. Therefore, the beads will need periodically to be replaced or cleaned or regenerated as is known in the art.

It will be apparent that the use of a bed of packed beads is not the only way possible for collecting ands separating the charge-induced agglomerations of wax. For example, with the gauze in position 30a, there is no further effect on the agglomeration process below the gauze, and the oil below the gauze 30a containing the grown wax agglomerates may be discharged from the separation vessel and the wax separated from the oil/wax mixture by a rotary drum filter, settler or any other means of filtration known in the art.

From the foregoing description, it will be appreciated that when the lubricating oil to be electrically treated contains both wax particles and water droplets, the wax particles will be deposited in the bed of packed beads, while water droplets grown on the bead surfaces will separate from the beads and settle under gravity to form the water layer in the bottom of the separation vessel. Therefore, the electrofiltration apparatus is effective for simultaneously dewaxing and dewatering lube oil.

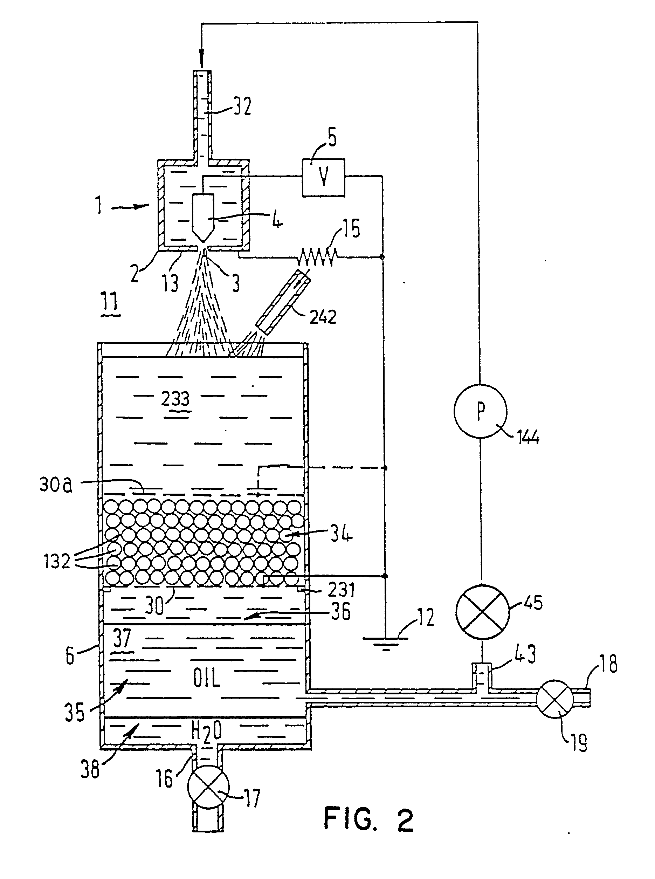

The electrofiltration apparatus depicted in Figure 1 will generally operate perfectly satisfactorily for water-in-oil emulsions, but when the lube oil contains wax there is a tendency for wax deposits building-up with time in the region of opening 3, thus unfavourably affecting the charging efficiency of the charge injector and resulting in partial or complete blockage ultimately. The embodiment shown in Figure 2 is designed to overcome this shortcoming. Here, the wax-containing oil is kept separate from the charge injector and passed along a delivery pipe 242 from which it is discharged through gas or vapor gap 11 into upper section 233 of separation vessel 6. A line 43, including pump 144 and control valve 45, branches out from outlet pipe 18 upstream of valve 19 and leads back, via line 32, to the inlet of charge injector 1. Therefore, the lube oil into which charge is injected is substantially wax-free, and deposition of wax to an extent which would affect the performance of the charge injector is much less likely to occur or can be substantially avoided. The charged, substantially contaminant-free, lube oil issuing from charge injector 1 and the uncharged contaminated liquid discharged from delivery pipe 242 are brought into contact with one another in upper section 233 of the separation vessel and mix there. Charge transfers in this region to the wax contaminant phase. In all other respects, the operation of this modified separation apparatus is the same as in the Figure 1 embodiment, including the alternative position 30a for the gauze. As before a level control arrangement can optionally be employed. In addition, vapor space 11 can again be enclosed, but the frusto-conical shaped cap which is used for this purpose has been omitted in Figure 2 for simplicity.

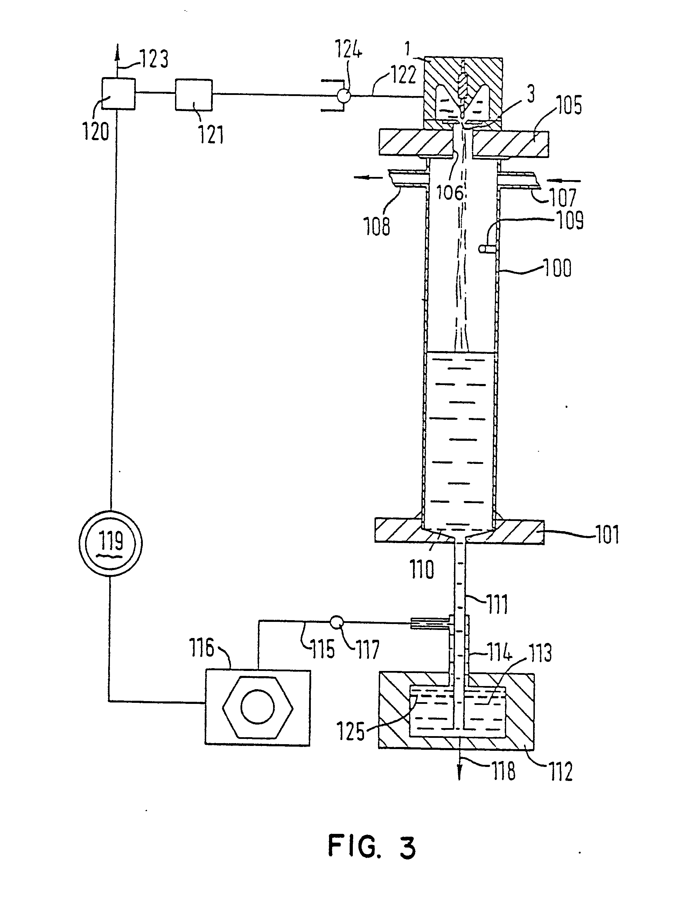

An experimental wax separation apparatus is shown in Figure 3 which can be used to separate wax from lube oil (with or without added oil solvent). Hexane is one preferred oil solvent and the description which follows relates to hexane-diluted waxy oil. It comprises an open-topped, upright cylindrical separation vessel 100 supported on a base 101. The separation vessel 100 is closed off at the top by a cover 105 which forms an air-tight seal. A charge injector 1, which can be constructed in the same way as the charge injector described above with reference to Figure 1, is mounted on top of cover 105. A central opening 106 in cover 105 is positioned immediately below the exit orifice 3 of the charge injector so that a downwardly directed stream of charged hexane-diluted waxy oil from the charge injector passes through the opening 106 in cover 105 and impinges onto a body of charged lube oil-hexane mixture in the separation vessel. An earthed grid electrode 110, indicated as a horizontal gauze but which can take the form of other shapes and configurations, is positioned inside the separation vessel close to its bottom, and completes the electrical circuit of the charge injector.

As shown, the separation vessel 100 may also be provided with a gas inlet and outlet, 107 and 108 respectively, for purging the enclosed space above the hexane-diluted lube oil in the separation vessel 100 so that all traces of air are removed. Gas outlet 108 may be connected to an oxygen analyser which monitors for the presence of air or oxygen in the purge gas exhausted from the enclosed atmosphere in separation vessel 100. The gas pressure in this enclosed space can be monitored by a pressure gauge, diagrammatically indicated at 109.

A conduit 111 extends downwardly from the bottom of the separation vessel and conveys charged lube oil-hexane mixture from the separation vessel to a settler 112. The settler comprises a setting chamber 113 including a filter screen 125 (for example a 32 mesh metal screen) extending horizontally across the chamber. Samples of the mixture in the settling chamber 113 can be taken, using sample line 118. An outlet pipe 114, arranged coaxially around conduit 111, projects upwardly through the top wall of the settler and is connected by line 115 to a turbidity meter 116 which measures the turbidity of the raffinate-hexane mixture passing through it. A preferred from of turbidity meter is one which optically measures the scattering of incident illumination by the oil-hexane mixture from its optical field of view. The temperature of the mixture flowing in line 115 can be monitored by temperature sensor 117 and closely corresponds with the temperature in the separation vessel 100.

A constant volume displacement pump 119 pumps raffinate-hexane mixture from the outlet side of the turbidity meter 116 to a gas separator 120 which separates entrained purge gas from the liquid mixture which then passes through a flow rate detector 121 in line 122 which is connected to the inlet of charge injector 1. Purge gas which has been separated from the liquid stream by the gas separator 120 is piped away along line 123 for recycling or discharge. The temperature and pressure of the lube oil-hexane mixture supplied to the charge injector 1 is monitored by temperature and pressure gauges at sampling point 124 in line 122.

15

In operation, a quantity of waxy lube oil (containing wax particles and crystals) to be treated for wax removal is introduced into the separation vessel, the lube oil being diluted with hexane. The pump 119 is then started up and the oil-hexane mixture circulates through the separation vessel 100, the settler 112 and back through the charge injector 1. The volumetric flow rate through the apparatus is determined by the pumping action of pump 119. Some of the wax particles suspended in the lube oil are so small (typically in the range 0.1 to 30 µm in diameter) that they cannot ordinarily be removed by passing through a filter medium while at the same time maintaining an adequate throughput on an industrial scale, even with a very fine filter medium. In the absence of charge injection, therefore, the waxy oil will merely circulate around the circuit and none of the wax particles will be restrained by the filter screen 125. However, when charge is injected into the hexane-diluted oily liquid by the charge injector 1 and the charged liquid impinges onto the top of the body of oil-hexane mixture in the separation vessel 100, the electric charge becomes attached to wax particles and crystals suspended in the hexane-diluted oil in the separation vessel and an electrophoretic migration of wax particles is induced which results in wax particle agglomeration and particle size growth in the separation vessel, as well as alterations in the crystal morphology as compared with that which is produced in the absence of charge injection. The grid electrode 110 is believed to contribute to the wax particle growth and agglomeration by providing a conduction path to earth for the charge on charged wax particles and agglomerates contacting the grid electrode. These particles accordingly lose their charge and therefore will agglomerate more readily with migrating charged particles encountering those uncharged particles. Some wax becomes deposited on the inner surface regions of the separation vessel or on the grid electrode 110, but most of the growing and agglomerating wax particles are swept out of the separation vessel 100 by the flow of oil-hexane liquid leaving the separation vessel at the bottom.

In the settler in which the residence time is comparatively long, grown wax particles start to settle under gravity and precipitate to form a mass of wax or a wax cake on the bottom of the settler. Other grown wax particles are drawn upwardly by the flow of hexane-oil mixture leaving the settler at the top, and providing they have grown to a sufficient size to be restrained by the filter screen 125, they are removed from the flow of hexane-oil mixture. Any wax particles which are small enough to pass through the filter screen will be recycled through the charge injector 1 and the whole process is continually repeated so that as time passes the proportion of wax in the oil-hexane mixture from the settler becomes lower and lower. When the wax content is sufficiently low as determined by the turbidity meter 116, the substantially wax-free oil-hexane mixture is discharged from the apparatus, using line 118, and the next batch to be treated is introduced, and so on.

It will of course be recognized that the residence time of the hexane-diluted oil (raffinate) in the separation vessel must be sufficiently long that adequate growth in wax particle size for the wax particles leaving the separation vessel has been achieved such that either the wax particles and agglomerates will separate, by settling, from the raffinate-hexane mixture in the settler 112, or the filter screen 125 can filter the wax particles from the oil-hexane mixture. For a given mesh size for the filter screen and for a separation vessel of given dimensions filled to a particular level, the pump delivery and purge gas pressure will need to be chosen to achieve the desired growth in wax particle size in the separation vessel.

For separating water droplets from oil, a similar arrangement can be used, except that the settler will be specially designed for separating water by gravity settling and there would be no need for a filter screen, except if both wax and water are present at the same time in the oil mixture to be treated.

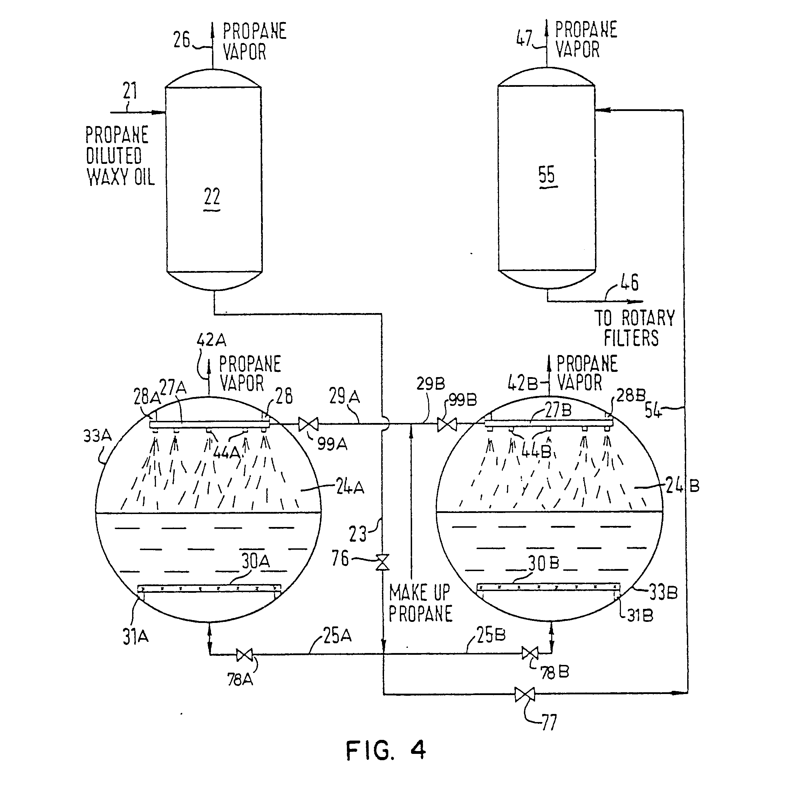

Referring now to Figure 4, there is shown, diagrammatically, one form of batch treatment plant which embodies a modification to a known kind of wax separation apparatus and represents a relatively inexpensive, simple and effective way of implementing the present invention. Liquid propane solvent at a temperature of typically 80°F (26.7°C) to 200°F (93.3°C) is added to waxy lube oil from tankage at a temperature of typically 140°F (60°C) to 200°F (93.3°C) and the propane-diluted oil feed is precooled in a precooler (not shown) to a temperature (about 80°F or 67.7°C) above the cloud point for the oil-solvent mixture (i.e., the temperature at which wax particles start to come out of solution). The propane-diluted, precooled, waxy oil feed is conveyed along line 21 and introduced into a feed drum 22 in which a quantity of propane-diluted waxy oil is stored, from which propane-diluted waxy oil is fed to a minimum of two batch chillers. In the illustrated embodiment just two batch chillers 24A, 24B are used. In embodiments having more than two chillers, the chillers are arranged into two groups with the chillers of each group interconnected. In this way, a batch of propane/waxy oil can be treated in one batch chiller (or group) while the other one is emptied and re-filled and *vice versa* so that in effect the facilities upstream and downstream of the batch chilling can be operated continuously. The following description applies to batch chiller 24A and its associated pipework and valves but it will be appreciated that the description applies equally to the other batch chiller 24B and its associated equipment by substitution of the suffix "B" for "A".

Propane-diluted waxy oil is fed from feed drum 22 along feed line 23 followed by fill/dump line 25A to batch chiller 24A. Some of the dissolved liquid propane in feed drum 22 vaporizes and propane vapor is conveyed away from the drum along line 26. Only a small temperature drop normally occurs in feed drum 22, in order that the temperature of the propane/waxy oil entering the batch chiller 24 remains near the cloud point of the oil-solvent mixture.

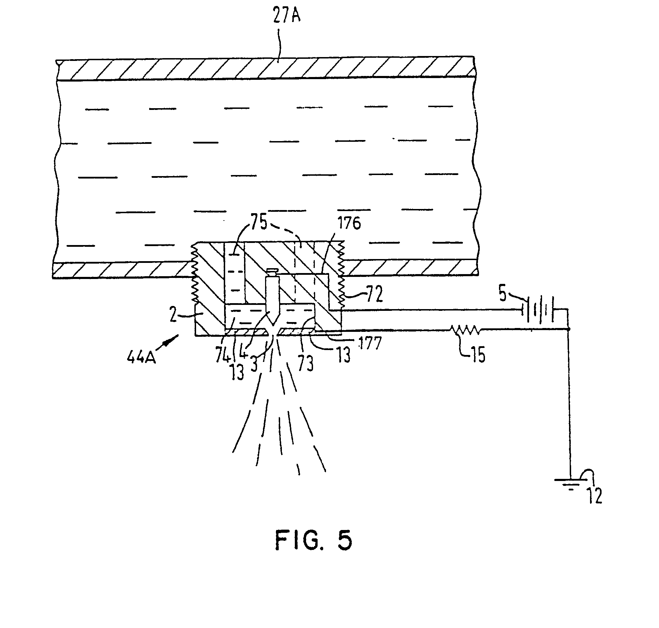

In this example, batch chiller 24A comprises a spherical container vessel 33A having an inlet connection at the bottom to which the fill/dump line 25A is connected. The diameter of the container vessel is typically about 25 feet (7.62 m). Inside the container vessel in its top region is mounted an annular propane distributor ring or header 27A arranged in a horizontal plane. The header is supplied with water-free liquid make-up propane by propane delivery line 29A, which includes a control valve 99A. The mountings for the header are very diagrammatically indicated by reference numeral 28A and may assume any convenient form. The header is provided on its underside at regularly spaced angular positions with internally screwthreaded openings into which, in the known wax separator, are fitted respective, externally screwthreaded, spray nozzles. However, in the present embodiment, each spray nozzle is replaced by a charge injector 44A which will be described in more detail hereinbelow with reference to Figure 5. A propane vapor line 42 is connected to the top of each container vessel 13.

Apart from the charge injector 44A, the only other modification incorporated into the batch chiller 24A is that a grid electrode 30A is supported inside spherical container vessel 33 in its bottom region. The grid electrode 30A is connected to earth and completes the electrical circuit of the several charge injectors 44A. Specifically, electrical charge in the waxy oil/propane mixture in the container vessel 33A is collected by electrode 30A and conducted away to earth. Conveniently, the grid electrode is circular in shape, of small thickness and arranged in a horizontal position. Suitably, it can be constructed as a circular grating or gauze for example. The particular form which the grid electrode takes is not of any great significance. Again, the grid electrode is mounted in any appropriate way. For example, it may be supported on an annular internal shoulder 31A on the inside spherical surface of the container vessel 33A. Alternatively, the grid electrode could be vertically oriented, extending to just below or just above the level of the propane/oil mixture in the batch chiller. For a 25 foot (7.62 m) diameter container vessel 33A, the level of the mixture in the batch chiller 24A will typically be between about 1 foot (0.3 m) above the center-plane of the container vessel and 3 feet (0.91 m) above the lowest point in the vessel 33A. In all cases the final level must be sufficiently below the propane header 27A and charge injectors 44A, in order that they can direct or spray propane onto the propane/oil mixture in the container vessel 33A. In another embodiment, a criss-cross arrangement of vertical grids, connected to earth, could be employed, the grids serving to compartmentalize the lower region of the batch chiller interior.

Fill/dump line 25A not only serves to supply propane-diluted waxy oil to the batch chiller 24A, but it also is used for emptying the chiller. For this purpose fill/dump line 25A is connected to a further line 54 which conveys the contents of the batch chiller 24A to a filter feed drum 55 provided at the top with a propane vapor line 47. In order to control the chilling and emptying of batch chillers 24A, 24B, control valves need to be used, for example in lines 23, 25A, 25B and 54. In Figure 3, these valves are shown at 76, 78A, 78B and 77 respectively. The filter feed drum then supplies a slurry of wax particles, lube oil and dissolved propane along line 46 to one or more rotary filters which are not shown. Such rotary filters do not form part of the present invention and need not be further described herein but they are well known in the art. An example of a suitable rotary filter is described in U.S. patent 4,309,288 (Ryan et al).

Some of the dissolved liquid propane in feed drums 22, 55 and in the batch chillers 24A, 24B vaporizes to form a propane vapor atmosphere in those vessels. Propane vapor from those vessels 22, 55, 24A and 24B is conveyed along lines 26, 47, 42A, 42B, respectively, to a refrigeration unit in a propane handling circuit (not shown) which can be used to supply one or more of the propane requirements of the treatment plant, e.g. the liquid propane feed introduced into the waxy oil feed upstream of the precooler and the feed drum 22 and/or the supply of dry make-up propane to the batch chillers.

With reference now to Figure 5, there is shown a vertical sectional detail through one of the charge injectors 44A mounted in the underside of the ring distributor or header 27A. In this Figure, reference numerals corresponding with those used in Figure 1 denote the same or corresponding parts and therefore such parts will not be described again, except as concerns different features, where applicable. It will be seen in Figure 5 that the opening in the header underside in which the charge injector 44A is mounted is internally screwthreaded, for normally receiving the externally screwthreaded propane nozzle of the typical known batch chiller. The charge injector comprises a body 2 of cylindrical shape formed with an externally screwthreaded portion 72 which is inter-engaged with the internal screwthread of the opening in the header wall underside. The body 2 comprises a cylindrical block of electrically insulative material in which a blind cylindrical recess 73 is formed in the lower region. The bottom wall 13 of the charge injector comprises a circular electrically conductive plate, with a central opening 3, which closes off the blind recess at the bottom to define an enclosed space 74 within charge injector body 2. This enclosed space communicates by means of a plurality of axial passageways 75, drilled in cylindrical block 2, with the inside of header 27. Conductor buses 176, 177 embedded in the material of block 2 are connected at one end to the pointed, high potential electrode 4 and to the plate electrode 13, respectively, and project at their other ends through the side wall of the charge injector body 2 where they are connected by electrical wiring to the negative terminal of high voltage power supply 5 and resistance element 15. Each charge injector 44B in header 27B of batch chiller 24B is identically constructed to charge injector 44A.

The operation of the wax separation plant will now be described. Initially, one batch chiller 24A is empty while a batch of lube oil/propane/wax slurry is being chilled in the other batch chiller 24B. The last batch of chilled lube oil/propane/wax slurry from batch chiller 24A has been transferred to feed tank 55 (for example by means of a pump in line 54, not shown for clarity, or by driving the batch out by pressurizing the vapor space in the upper region of batch chiller 24A with propane under pressure delivered by a compressor, also not shown for clarity), valve 99A is closed, the propane headers 27 are inoperative, valves 76, 77 and 78A are all shut, and a quantity of propane-diluted waxy oil is stored in feed tank 22. Then, valves 76 and 78A are opened and propane-diluted waxy oil from tank 22 is conveyed along lines 23 and 25A (for example by means of a pump (not shown) or by pressure and gravity) and enters the batch chiller 24A at the bottom. At the same time, feed tank 22 is replenished with fresh propane-diluted waxy oil through line 21. When an appropriate quantity of the propane/oil mixture has been admitted to the batch chiller 24A, valves 76 and 77A are closed.

The next step in the batch treatment process is to supply dry make-up propane to the header 27A. The propane passes through the charge injectors 44A of the header which inject charge into the propane at a controlled rate or intermittently. The charge injectors direct the charged propane downwardly through the propane vapor space in the batch chiller container vessel 33A and onto the mixture of propane-diluted waxy oil in the vessel where the charged propane mixes with the liquid mixture. At the same time, a proportion of the propane in the container vessel, which is under pressure, is caused to vaporized by gradually releasing pressurized propane vapor through line 42A. This vaporization produces a cooling effect which can be controlled by appropriately controlling the back pressure in the batch chiller and volumetric flow rate of make-up propane supplied to the header 27A, to produce a gradual reduction in the temperature of the batch chiller. As the temperature approaches and falls below the cloud point and due to the reduced solubility of the wax in the propane/oil/wax mixture, nucleation of the dissolved wax starts to take place, after which the wax begins to crystallize and form a precipitate or suspension in the oil/propane mixture. Furthermore, the electric charge introduced by the charged propane which is directed or sprayed into the batch chiller 24A becomes attached to the nucleating wax species and the wax particles which are forming, and at the same time causes an electric field to be induced in the cooling propane-diluted waxy oil. The electrophoretic effect arising through the interaction between the charged wax particles and the induced electric field causes wax particles to migrate within the oil/propane mixture and unite and grow to form larger wax particles. The process is continued until sufficiently large wax particles and crystals have been grown such that they can easily and effectively be separated from the remaining propane/oil mixture by the rotary filters. Some of the wax particles will adhere to the grid electrode 30A while others will deposit on the inner wall surfaces of the container vessel walls, but most of the wax will remain as a suspension or precipitate in the batch chiller. It will be appreciated that the wax crystal growth is brought about cumulatively by three effects, namely nucleation followed the formation of wax particles due to temperature reduction, the lower solubility of wax in the propane, and the electrophoretic effect produced by the injected charge.

Having completed the batch treatment in batch chiller 24A, the charge injectors 44A are switched off and the supply of propane to the header 27A shut off, and then the valves 78A and 77 are opened and the contents of the batch chiller 24A emptied, via line 25A and line 54, into feed tank 55 while the former contents of feed tank 55 are fed along line 46 to the rotary filters. Before batch chiller 24A is emptied, batch chiller 24B is filled and the above-described chilling cycle is repeated in batch chiller 24B. In each rotary filter, a wax cake is formed on the filter cloth and separated from the propane-diluted oil. The propane-diluted oil leaving the rotary filters is substantially wax-free and is then fed to a propane recovery unit which recovers the dissolved propane leaving lubricating oil which is substantially free of wax and propane.

It has already been remarked that the temperature of the propane/oil mixture entering the batch chillers is kept near the cloud point of the wax. This is because in known batch chillers which do not include any charge injectors, optimum growth of large wax crystals from dissolved wax can only be achieved where the propane/waxy oil temperature is reduced very gradually below the cloud point to promote wax precipitation and gradual cooling is achieved only in the batch chillers. This requirement is not critical with the modified batch chillers because the charge injection compensates for any diminution in wax crystal growth arising through shock chilling. Therefore, less precooling upstream of the feed tank 22 is required and some flashing in feed tank 22 can be tolerated. This results in a reduced chilling load on the batch chillers which can lead to increased plant capacity.

By means of the very simple modification of the known batch chillers by replacing the spray nozzles by charge injectors and installing the grid electrode in the bottom of each batch chiller vessel, much more effective wax particle and crystal growth can be obtained. Therefore, the factors which normally affect crystal size, namely rate of chilling, dilution ratio, dewaxing aid concentration, and level of agitation, all become less critical and this allows substantial operating cost savings. Another advantage is that by using the same refrigeration requirements, the resulting wax particle size will be larger so that simpler downstream rotary filter devices can be used such as drum separators. It is also pointed out that because of the enhanced wax particle growth produced by the charge injection, it is no longer critical to maintain the temperature of the propane-diluted waxy oil near the cloud point before entering the batch chiller, as already mentioned. In addition, dewaxing aids which are often used in batch chiller propane dewaxing are no longer necessary. Nucleating and agglomerating-type dewaxing aids account for approximately 20 to 30% of the controllable operating costs of conventional propane dewaxers, and therefore the incentives for eliminating their need is both large and achievable, using the wax separating plant described with reference to Figures 4 and 5.

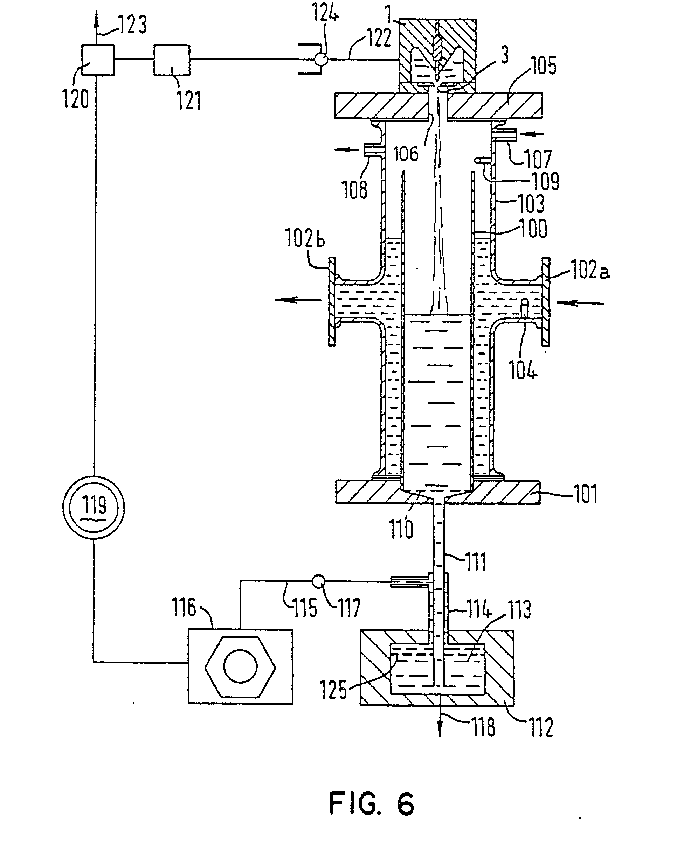

An experimental wax separation apparatus is shown in Figure 6 which was used to separate dissolved wax from raffinate-hexane mixtures. This apparatus is very similar indeed to that depicted in Figure 3 but additionally includes an upright cooling jacket 103, which surrounds the separation vessel 100 and has having cooling fluid inlet 102a and cooling fluid outlet 102b for circulating a cooling fluid, e.g. water, or, when sub-zero 0°C temperatures are maintained, any other suitable refrigerant, through the cooling jacket to maintain the separation vessel at a desired temperature. In addition in this embodiment, the cooling jacket is provided with the purge gas inlet 107 and outlet 108, and the gas pressure gauge 109 is mounted inside the cooling jacket. The bath temperature is monitored by a thermometer device 104 which can be connected in a suitable control system for maintaining the bath temperature at any selected value within a preselected range, which typically might be −20°C to +40°C.

In operation, a quantity of preheated raffinate to be treated for wax removal is introduced into the separation vessel, the raffinate being diluted with hexane. The experimental work to be described below was conducted with hexane as the oil-solvent but it will be appreciated that other oil-solvents may be used instead, propane being a preferred diluent. Upon starting up pump 119, the raffinate-hexane mixture circulates through the separation vessel 100, the settler 112 and back through the charge injector 44, the volumetric flow rate through the apparatus being determined by the pumping action of pump 119. As the liquid mixture flows through the charge injector, charge is injected into it and the charged liquid mixture impinges onto the top of the body of raffinate-hexane mixture in the separation vessel 100 and accumulates there. During this time, the cooling fluid circulating through the cooling jacket maintains the temperature in the separation vessel at a suitable value such that nucleation of dissolved wax and formation of wax particles and crystals starts to take place, assisted by the effect of the injected electric charge. The charge becomes attached to wax particles and crystals suspended in the separation vessel and an electrophoretic migration of wax particles is induced which results in wax particle agglomeration and particle size growth in the separation vessel. The wax separation process takes place, in other respects, in essentially the same way as described above in connection with Figure 3.

The foregoing description will now be illustrated by way of various Examples.

Example 1

An experiment was run using micron-size water droplets dispersed in a variety of lube base stocks and paraffinic white oils. The experimental apparatus was shown schematically in Figures 1 and 2. In both cases charge was injected and charge transfer and droplet coalescence occurred in the upper or coalescence section of the separation vessel. The water-in-oil emulsion now containing larger water droplets was passed through the bed of packed glass beads. As the charged emulsion passed through the bed large water droplets settled out on the bead surfaces. Some of the water adhered to the bead surfaces while the remainder drained off into the emulsion where it settled into a water layer at the bottom of the separation vessel.

The water was introduced into each of the various oils by either contacting the oil with steam or by subjecting the oil and added water to a high velocity shear. The resulting water-in-oil emulsion was allowed to settle for 12 hours and a sample decanted from the top of the separation vessel. The water content was measured before and after the experiment using a variant of a Karl Fischer titration technique. The average size of the water droplets was of the order of 2 μm in diameter as determined by optical microscopy. Injected charge densities of ~0.2C m$^{-3}$ were employed and flow rates of 12 cm$^3$ s$^{-1}$ were maintained through the charge injector. The power dissipated was 50 mw during the run. The sample size was 1 liter and the flow rates through the packed beads comprising 0.4 cm beads varied with the sample concerned but was no greater than 10 cm$^3$ s$^{-1}$. The bed height was 12 cm and diameter was 8 cm. Passing the emulsion through the apparatus without charge injection resulted in removal of some of the water (~50%). This number varied considerably. However, when the charge injector was switched on, the results set out below were obtained. The results listed in the table are the best results of a series of experiments and show the effectiveness of the separation technique.

# EP 0 179 135 B1

TABLE
Best results of charged fluid coalescence tests for
several viscous oils with added dispersed water

| Feed | Viscosity @ 20°C (cp or mPas) | Excess $H_2O$ (ppm) | |
|---|---|---|---|
| | | In | Out |
| Marcol® 52 (white oil) | 11 | 820 | 8 |
| SI50N (lube base oil) | 55 | 531 | 8 |
| Marcol® 52/Primol 355 (white oil mixture) | 95 | 355 | 5 |
| Primol® 355 (white oil) | 155 | 630 | 32 |
| S600N (lube base oil) | 255 | 800 | 8 |
| S600N (lube base oil) | 255 | 7000 | 400 |
| Bright Stock (lube base oil) | 2100 | 550 | 70 |

Example 2

By way of a second example, it has been demonstrated that wax crystals, which may be present as a dispersed contaminant phase in a lubricating oil, may be made to agglomerate in the bulk of the liquid by the injection of free excess charge.

Marcol® 52, a highly refined white oil manufactured by Exxon Chemical Company, was mixed with a waxy raffinate from a commercial lubricating oil dewaxing plant which contained 15% wax. The wax content of the final mixture was 0.25%. The mixture was stirred at an elevated temperature of about 60°C. Upon cooling wax crystals were precipitated from the mixture to form a dispersion of wax in the white oil.

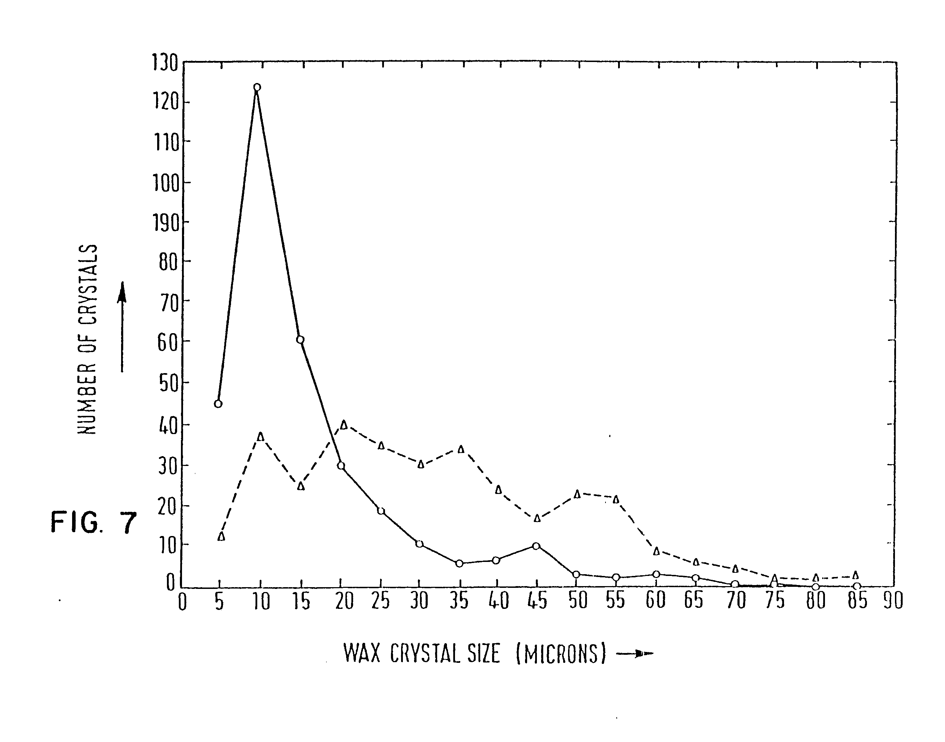

The wax-containing white oil was passed through a charge injector and into a vessel such as shown in Figure 1, except that the separation vessel contained no glass beads. The wax crystal size distribution upon sampling with an optical image analyzer and where the charge injector was inoperative is shown as the continuous curve in Figure 7. The size distribution had a mean value of 14 µm diameter and 70% of the crystals were smaller than 20 µm.

Subsequent to passing the two-phase mixture through the apparatus with charge injection occurring, the measured size distribution is shown on the dashed, broken line in Figure 7. It can be seen that a significant amount of agglomeration occurred increasing the mean wax crystal size to 30 µm with the wax particles below 20 µm decreasing their fraction to 23%.

Example 3

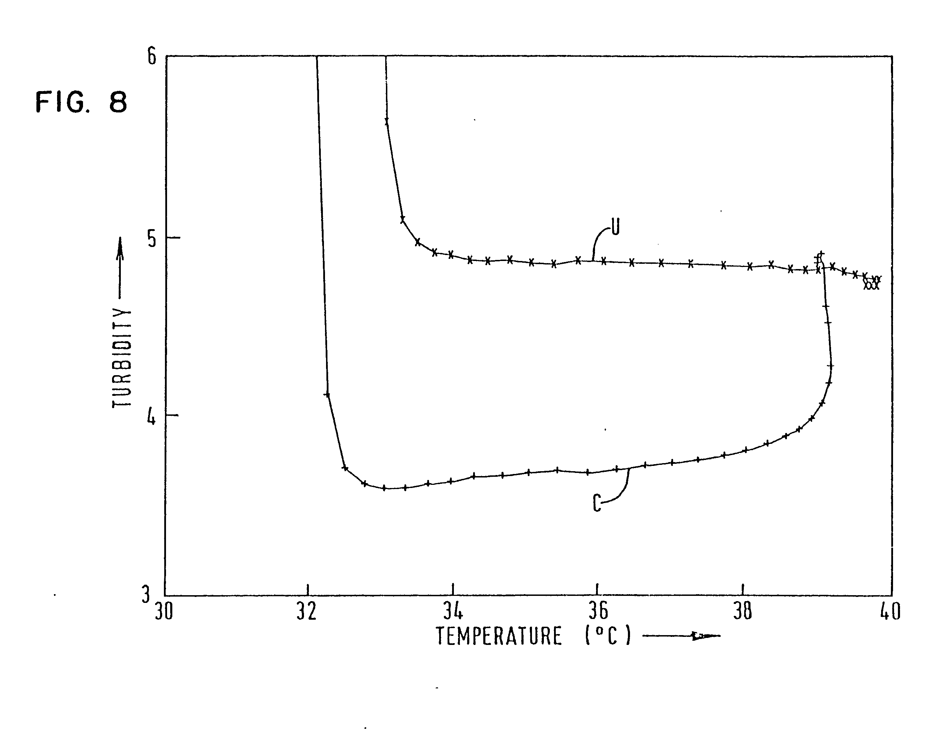

Some experimental work which has been conducted, using the apparatus depicted in Figure 6 to demonstrate the effect of charge injection in lube oil dewaxing will now be described, with reference to Figures 8 to 15 of the accompanying drawings.

In all the experiments, a mixture comprising 25% by weight of raffinate and 75% by weight of hexane diluent was used. In each experiment, the raffinate/hexane mixture was introduced into the separation vessel and the bath or cooling jacket temperature as determined by thermometer device 104 was increased until (at a temperature of about 50°C) the separation vessel temperature as detected by temperature sensor 117 indicated that the raffinate/hexane had reached the required initial temperature of about 40°C. This instant was taken to define the time t=0. The bath temperature was then reduced by circulating the cooling fluid through a refrigerating unit (not shown). The separation vessel temperature did not start to fall until the bath temperature had decreased below the separation vessel temperature. The separation vessel temperature then fell fairly rapidly for a while but the temperature fall rate gradually reduced as the bath temperature approached the temperature of the refrigeration unit.

Immediately prior to starting to reduce the cooling jacket temperature, pump 119 and charge injector 44 were switched on. The charge injector voltage was approximately 60 nano amps at an applied voltage of about 3—4 kV. The flow rate through the charge injector was approximately 1 ml/sec. The numerical values given in the following figures for turbidity are based on arbitrary units but indicate the degree of optical

20

absorptivity of white light by the raffinate/hexane mixture. Turbidity readings were taken at approximately 10 second intervals and the average turbidity values then computed for 1 minute intervals. For each of the experiments, as described below, two sets of data were obtained, one with the charge injector switched off throughout the entire cooling range and the other with the charge injector operating, in order to provide a comparison as between the effect of charge injection and no charge injection under otherwise the same operating conditions. In Figures 8 to 15, the data for the case of uncharged raffinate/hexane mixture (no charge injection) is denoted by curve U and for the experiment where the mixture is charged (charge injector operative), the data is presented by curve C.

Referring to Figure 8, this represents the turbidity readings obtained when cooling a sample of raffinate/hexane from an initial temperature of about 40°C down to about 32°C, in an experiment in which no settler 112 was used and in which conduit 111 was connected directly to the inlet of the turbidity meter 116. In the case where no charge injection was applied, the turbidity data points (curve U), each representing the average of the several readings taken over each 1 minute interval, remained substantially constant (at a value just below 5) until the temperature had fallen to about 33.5°C, following which cooling down to about 33°C produced a dramatic increase in the turbidity reading. The sharp increase in measured turbidity value was indicative of the onset of wax nucleation followed by crystallization.

In the case where charge injection was applied, however (curve C), the turbidity value fell fairly steeply at around 39°C and then remained relatively constant (between turbidity values of between about 3.5 and 4) until the temperature had fallen to about 32.5°C, whereupon further cooling brought a dramatic rise in the observed turbidity value.

It should be noted that in this experiment, because the settler 112 was omitted from the apparatus, there was no collector surface intentionally provided for the wax crystals and particles being formed in the raffinate/hexane mixture. However, the fall in the turbidity value at the temperature of about 39°C is believed to be due to the fact that the charge injection was removing microscopic inclusions by deposition on the grid electrode 110, thereby leaving a raffinate/hexane mixture of lower turbidity value.

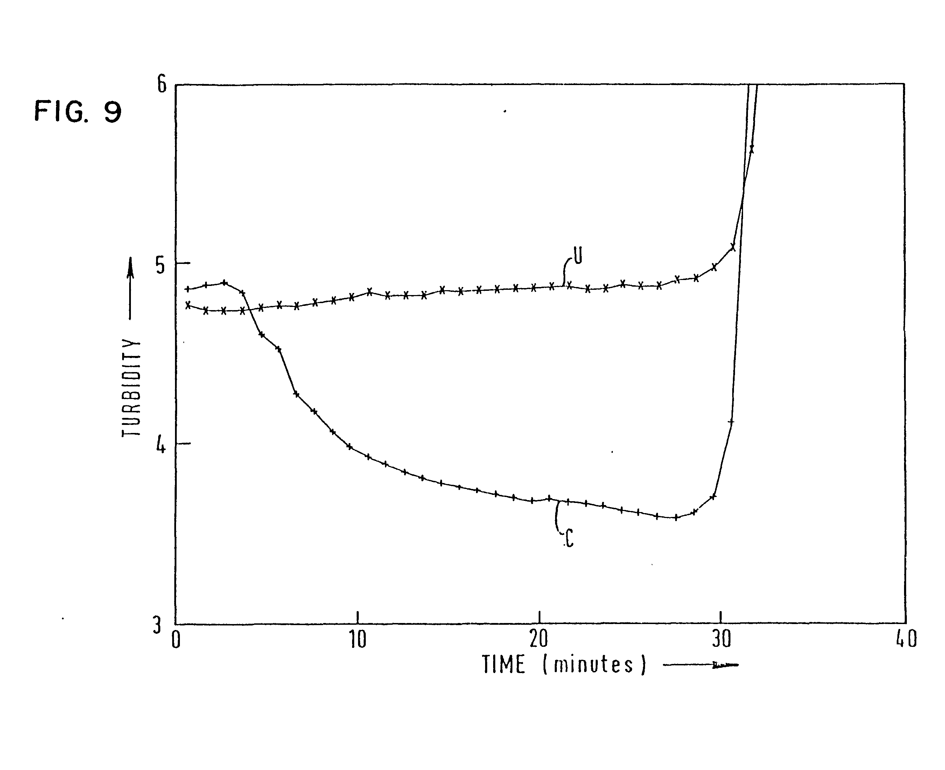

Figure 9 presents essentially the same data as in Figure 8 except that turbidity is plotted as a function of time as opposed to temperature. Because as explained above the initial temperature fall of the separation vessel was comparatively small, followed by more rapid cooling and then more gradual cooling again, the observed turbidity value for the first ten minutes or so fell comparatively slowly with time, in the case where the charge injector was operative, as shown in Figure 9.

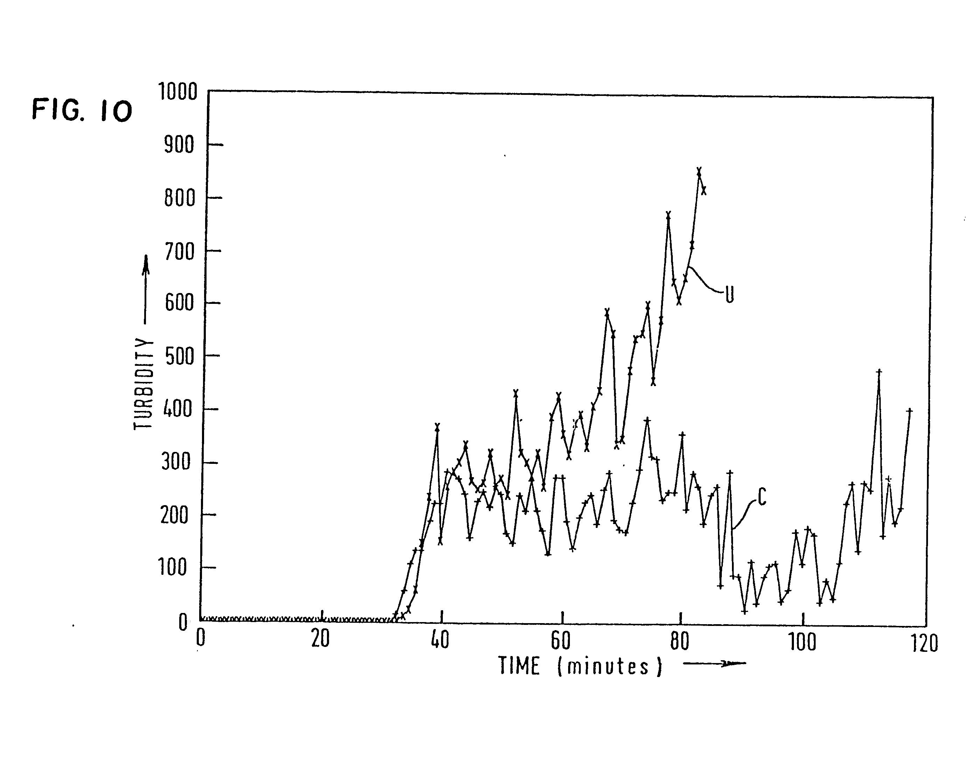

Figure 10 presents the same data as Figure 9, except that the turbidity was measured over a much longer time scale. It should be noted that the turbidity units presented in Figure 10 are the same as those in Figure 9 and that is why, on the scale of Figure 10, the turbidity readings for both the case where charge was injected and charge was not injected appears to be close to 0 until about 30 minutes after the turbidity readings were first taken.

In the case where no charge injection was used, as the temperature of the raffinate/hexane mixture continued to be reduced, a high density of very small wax particles was observed in the raffinate/hexane mixture. The lower the temperature, so lower melting point wax species started to precipitate in the raffinate/hexane mixture, thereby increasing the turbidity value as indicated by the uncharged curve (U) rising with increased time. The sharp peaks and short-term fluctuations observed in the curve are believed to be due to the random distribution of the fine wax particles. At some instants, relatively more wax particles will happen to be in the optical field of view of the turbidity meter whereas at other times a lower density of wax particles will be present. The important feature to notice, however, is the trend towards increasing turbidity with reducing temperature (increasing time).

However, when a further sample was tested in the same way but with the charge injector switched on (curve C), it was observed that much larger wax crystals were formed than in the uncharged case, and the raffinate/hexane mixture was relatively clearer or less cloudy. The turbidity readings over the time span t=30 minutes up to t=120 minutes are consistent with this experimental observation. The turbidity readings fluctuated about a mean value of approximately 200 over this entire time span, as distinct from the rising trend in the case where no charge injection was applied (curve U). This is believed to be due to the fact that the raffinate/hexane mixture, when the charge injector was operating, was observed to be relatively clear. The relatively large peaks and short-term fluctuations in curve C can be explained by inhomogeneities in the number density distribution of wax particles in the field of view of the turbidity meter.

It is remarked that, where charge injection was applied, some deposition of wax crystals on the grid electrode 110 was observed. Such wax deposition may have contributed to the lower observed turbidity values, but it is believed that such contribution was comparatively small because most of the wax crystals were observed to be continually recycled through the apparatus.

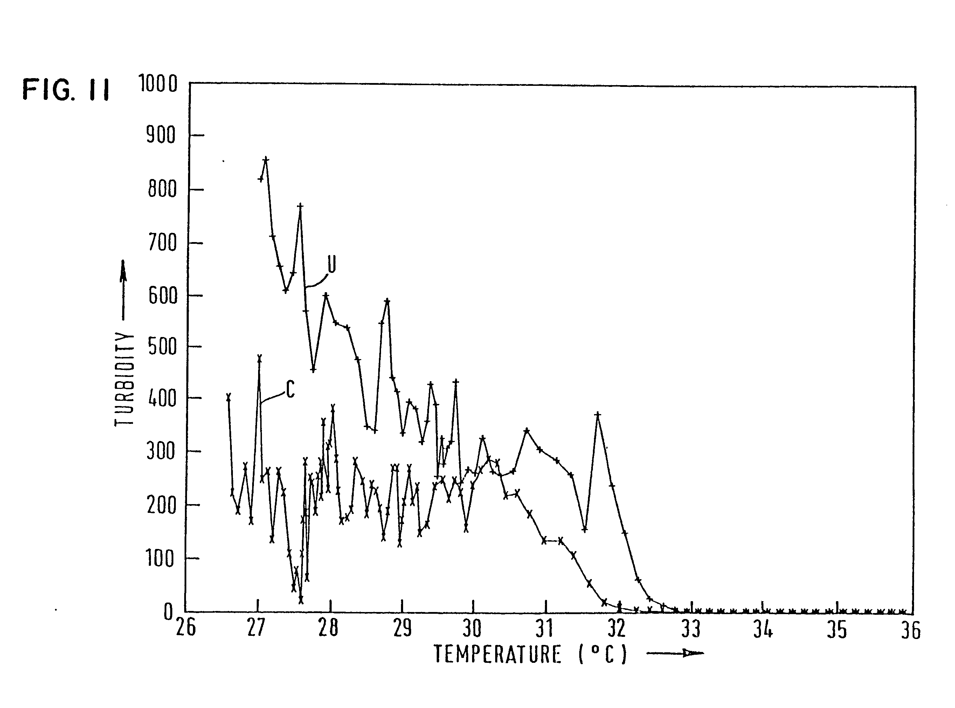

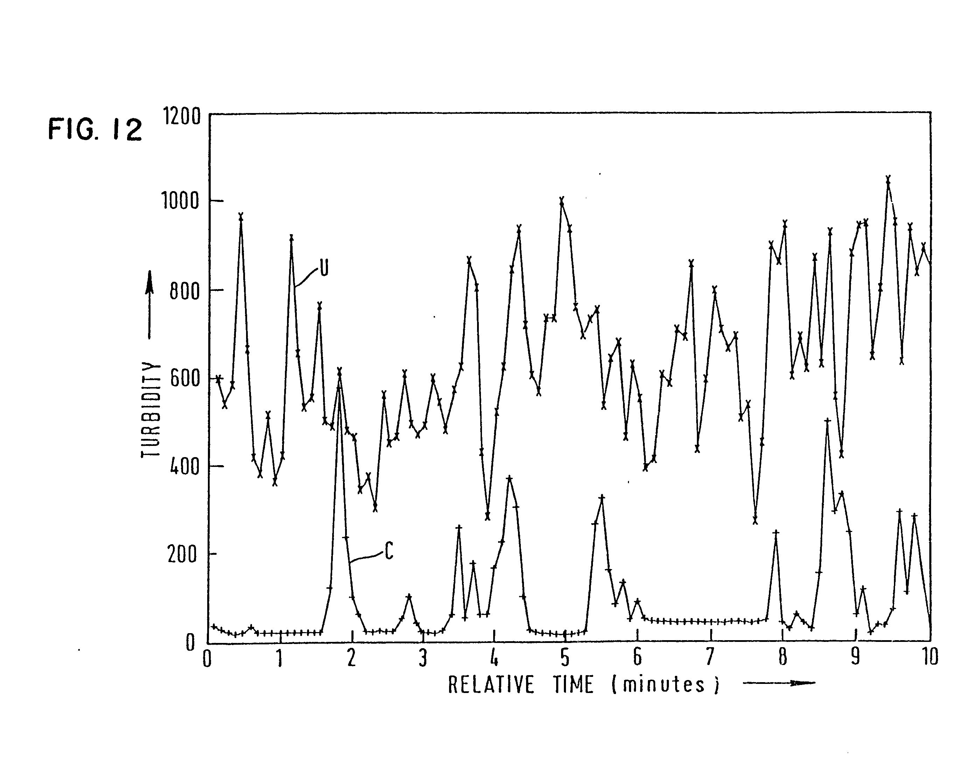

Referring now to Figure 11, this presents the same data as in Figure 10, except that turbidity is plotted as a function of separation vessel temperature as opposed to time. The same comments as were made above in connection with Figure 11 apply equally in the case of Figure 12.

Turning now to Figure 12, this presents the experimentally determined data for measured turbidity, for the cases of charge injection (C) and no charge injection (U), over a time span of 10 minutes, for which the mean separation vessel temperature was 27.6°C. It was remarked earlier that the data points plotted in Figures 8 to 11 were in fact mean values of several readings taken over 1 minute intervals. In Figure 12, however, average turbidity readings over a 10 sec time span are plotted. As explained previously, the big fluctuations in the case where no charge injection was applied are believed to be due to the random distribution of fine wax particles in the raffinate/hexane mixture. Similarly, where charge injection was applied, the sharp peaks represent the presence of large wax particles in the optical field of the turbidity meter. What, however, is of interest in Figure 12 is that, apart from the presence of the sharp peaks, the measured turbidity value is almost uniform and also remarkably low (about 20 to 40 units). This uniform low value is believed to represent the turbidity of clarified raffinate/hexane mixture (substantially wax-free) without any wax particles being present in the field of view of the turbidity meter at the time that the readings concerned were taken. If any of the raffinate/hexane mixture examined were to have contained large numbers of small wax crystals in addition to the large wax crystals were which observed, then one would not have expected the observed turbidity value between peaks to have been either so low in value or of almost uniform magnitude. The implication, therefore, is that all the wax particles originally produced, of all sizes, were grown to form large wax crystals leaving substantially no small ones remaining.

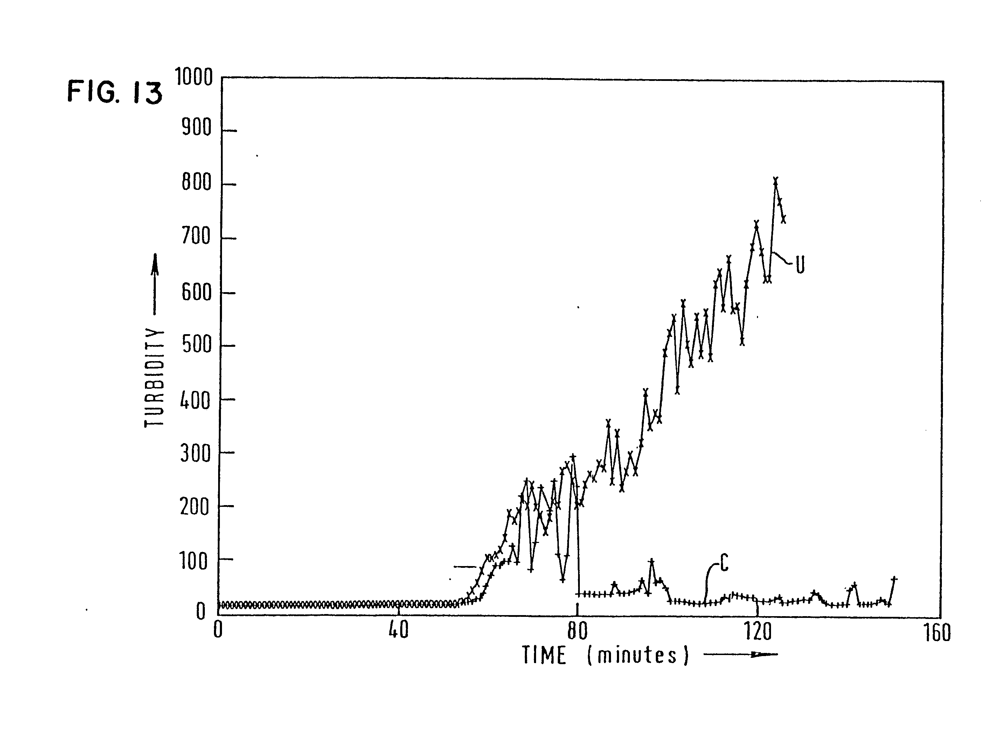

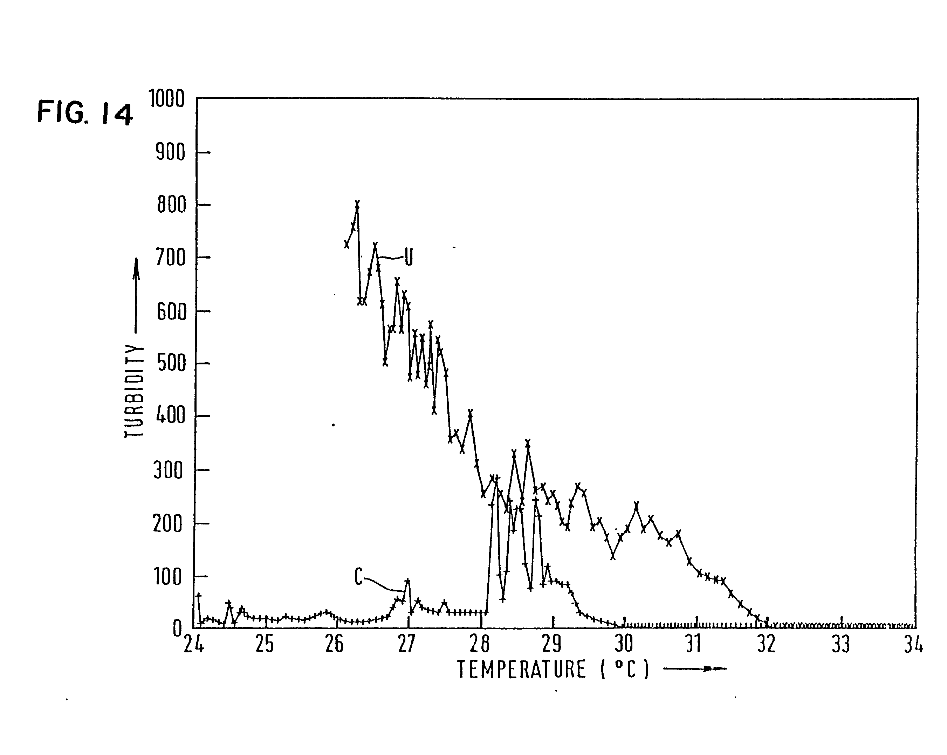

Additional experiments were then run, this time with the settler 112 connected up as shown in Figure 6 between the separation vessel 100 and the turbidity meter 116. With the charge injector inoperative, little wax was collected by filter screen 125 and the measured turbidity value was observed to rise with increasing time, as shown by curve U in Figure 13. In particular, the data curve U in Figure 14 corresponds fairly closely with the corresponding curve in Figure 10, thereby indicating that the settler 112 is largely ineffective in the absence of injected charge. However, when the experiment was repeated with the charge injector switched on, wax crystals were observed to be restrained by the filter screen 125. Furthermore, the raffinate/hexane mixture was observed to become relatively clear during the experiment and this observation is wholly consistent with the measured turbidity over the entire time span of the experiment. The observed turbidity value from t=80 minutes to about t=150 minutes was very much lower than the corresponding data presented in Figure 10 where no settler was used. It is interesting that in Figure 13, between about t=55 minutes and t=80 minutes, the measured turbidity showed an increasing trend before falling significantly at about t=80 minutes, whereafter it remained at a comparatively low and constant value for the remainder of the experiment. Possibly, this rise is due to the formation and growth of wax crystals during that time but it was not until at time t=80 minutes that the wax crystals were big enough to be restrained by the filter screen 125.

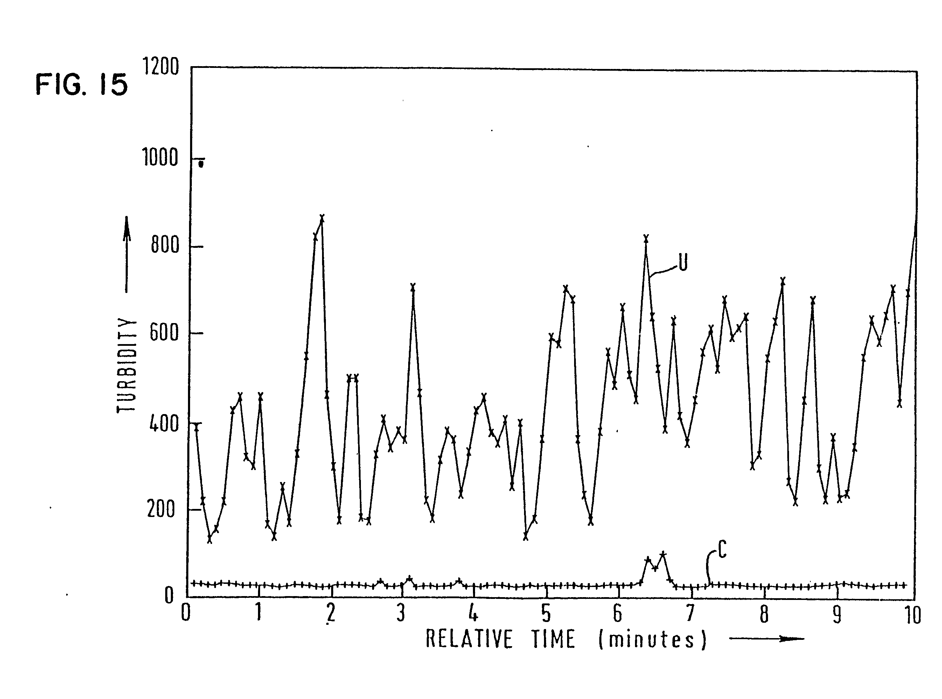

The data presented in Figures 14 and 15 correspond with that in Figures 11 and 12, respectively, except that for Figures 14 and 15, the settler 112 was used in the apparatus of Figure 6. Corresponding comments to those made in connection with the data of Figure 13 apply in the case of Figures 14 and 15 and therefore will not now be repeated. The important conclusion is that Figures 14 and 15 further illustrate how the filter screen 125 of the settler 112 is able to remove substantially all of the wax particles which have been grown by the charge injection process in the presence of hexane solvent. In particular, Figure 12 indicates that no large wax particles were within the field of view of the turbidity meter.

Example 4

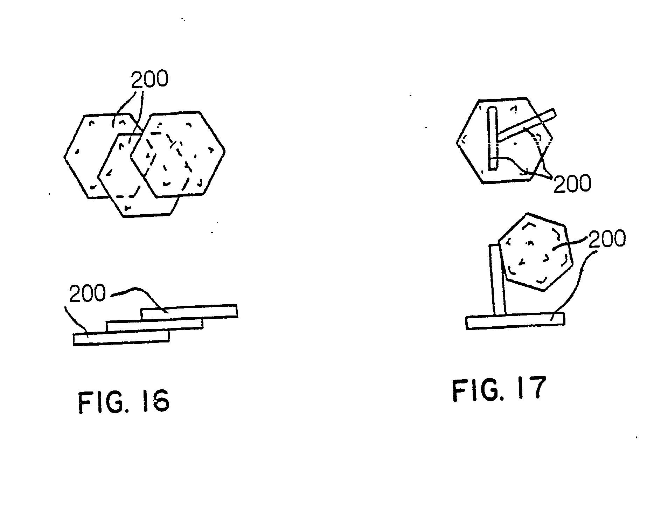

In a further experiment, a waxy lube oil/hexane mixture was cooled from an initial temperature of about 40°C, at which substantially the entire wax content of the lube oil was present as dissolved wax, down to an ambient temperature of about 25°C, causing dissolved wax to nucleate the precipitate as wax crystals, taking the form of hexagonal-shaped platelets. No charge was injected into the oil hexane mixture during the cooling. The resulting wax crystals were observed under a microscope and their configuration is depicted in the two views of Figure 16, the upper view representing a plan view of the crystal platelets, designated 200, and the lower view being a side view. Figure 16 shows that the wax crystals were observed to form groups of united hexagonal flat-plates which were stacked face-to-face. When a lube oil containing such wax particles is passed through a filter cloth, poor filtration is obtained due to the wax crystals clogging the fine openings in the filter cloth. This is believed to be due to the relatively "two-dimensional" shape of the individual groups of united wax crystals.

The experiment was repeated with charge injected continuously into an identical lube oil/hexane mixture over the entire cooling range (~40°C to ~25°C). The charge injector maintained a mean charge density in the lube oil/solvent mixture of about 0.01 Coulombs per cubic meter. The final wax crystals 200 were again observed to be hexagonal, flat platelets, but in this case the platelets 200 were observed to tend to grow or unite directly in edge-to-face manner, as shown in Figure 17. The inventors believe that this may result from charge induced alignment of crystals prior to collisional growth or prior to fusion of adjacent crystals or by charge inducing a preferential growth outward from a crystal face rather than a crystal edge. The resulting three-dimensional shape will improve filtration by avoiding blockage of the filter openings. Furthermore, any subsequent washing of the filter cake on the filter cloth will be enhanced by the open structure of the wax crystal network.

**Claims**

1. A method of separating a component which forms a dispersion in, or which is dissolved in, a continuous liquid, wherein net unipolar free charge is introduced into a quantity of the liquid completely filling a region of a vessel, the lateral peripheral boundary of said region being defined solely by the vessel wall and the vessel, at least in said region, being devoid of any collector surfaces within the interior of said region, said charge being introduced, substantially, by electron emission in the absence of ionic dissociation, which causes the continuous liquid to act as a medium through which volumetric distribution of the introduced charge takes place in said region by charge motion relative to the continuous liquid.

2. A method according to claim 1, wherein said component is a dispersed liquid component of which the liquid has a density different from that of the continuous liquid, and droplet conglomeration of the dispersed liquid component produced by the introduction of free charge causes liquid droplets to grow sufficiently in size to separate from the continuous liquid by buoyancy or gravity settling.

3. A method according to claim 1 or 2, wherein the continuous liquid containing said component and at least one collector surface, outside of said region, are brought into contact with one another, so as to cause separated component to accumulate on said collector surface(s).

4. A method according to claim 1 of separating a component in the form of a dispersion of particles/droplets from the continuous liquid, wherein particle/droplet conglomeration of the dispersed component produced by the introduction of free charge causes particles/droplets to grow sufficiently in size that on subjecting the particle/droplet-containing continuous liquid to filtration, said particles/droplets are removed from the continuous liquid.

5. A method according to claim 1 of precipitating wax dissolved in a hydrocarbon oil mixture boiling in the lubricating oil range, comprising the further step of reducing the solubility of the wax to assist the separation of the wax.

6. A method according to claim 5, wherein the solubility of the wax is reduced by cooling the oil mixture to cause dissolved wax to form a dispersion of wax particles and an oil solvent is added to the oil mixture to promote precipitation of dissolved wax as wax particles.

7. A method as claimed in claim 5, wherein a first oil solvent liquid is added to the waxy oil mixture to form an admixture, the admixture is cooled to the cloud point of the admixture in the absence of any introduced free excess charge, and then a second oil solvent liquid is added to said admixture, said second oil solvent liquid having a lower solubility for wax than for said admixture, so as to cause the wax to precipitate as wax particles, and the free excess charge is introduced into the admixture of waxy oil mixture and first and second oil solvents, to bring about agglomeration and growth of the precipitated wax particles.

8. A method according to claim 5, wherein the solubility of the wax is reduced by adding a vaporizable oil solvent liquid to the wax-containing oil mixture and allowing the oil solvent liquid to at least partially vaporize to reduce the temperature of the oil mixture.

9. A method according to claim 1 of promoting nucleation of a solute dissolved in a solvent, during the separation of the solute, comprising the further step of reducing the solubility for the solute, at least the charge introduction into the solution of solute and solvent or the solubility reduction being carried out at least until nucleation of the solute in the charged solution takes place.

10. A method as claimed in claim 9, wherein the charge introduction and solubility reduction are carried out simultaneously.

11. A method as claimed in claim 9 or 10, wherein a liquid additive is added to the solution to form an admixture, said liquid additive being such as to preferentially combine, physically or chemically, with the solute while providing an affinity for free excess charge.

12. A method as claimed in claim 9, 10 or 11, wherein a given quantity of said solution is introduced into said vessel and the vessel temperature is reduced while the free excess charge is added to the solution in the vessel.

13. A method as claimed in any preceding claim, wherein said free excess charge is injected into a stream of component-containing liquid and the charged stream is directed into said vessel through a gas or vapor space, so as to reduce any dissipation of charge from said vessel back to where the charge injection takes place.

14. A method as claimed in any one of claims 1 to 12, wherein the free charge is introduced into the component-containing liquid by injecting charge into a charge carrier liquid which is substantially free of said component and then bringing the carrier liquid and component-containing liquid into contact with one another in said vessel.

15. Apparatus for performing a method according to any preceding claim, comprising:
—means (2) for constraining said liquid to flow through an enclosed space filled by said liquid;
—an exit orifice (3) through which the liquid leaving the enclosed space passes;
—means (13, 4) arranged to introduce net unipolar free charge into the liquid before the liquid enters said exit orifice (3);
—a vessel arranged to receive the charged liquid from said orifice (3) and having a region (233) for containing a quantity of said liquid, the lateral peripheral boundary of said region being defined solely by the vessel wall, said vessel (6), at least in said region (233), being devoid of any collector surfaces within the interior of said region; and
—means providing a gas or vapour space (11) between said exit orifice (3) and said vessel (6) such that the charged liquid passes through said gas or vapour space (11) as a spray or stream enveloped by gas or vapour in said gas or vapour space (11).

16. Apparatus as claimed in claim 15, wherein said vessel (6) contains a bed of densely packed beads

23

(132) of low electrical conductivity in a further region inside the vessel such that enlarged particles/droplets, settling under gravity from the first-mentioned region (233), enter said further region and accumulate on the exposed surfaces of said beads.

17. Apparatus as claimed in claim 15 for separating a dispersed component in the form of particles and/ or droplets from said continuous liquid, wherein said region occupies the whole of the interior space of said vessel (100), the apparatus further comprising a separation device (112) and said vessel (100) being provided with means (111) for conveying liquid phase from said region, containing enlarged particles/ droplets, to said separation device (112), for separating the enlarged particles/droplets (Figure 3).

18. Apparatus as claimed in any one of claims 15 to 17, wherein said charge introducing means comprises a charge injector (1).

19. Apparatus as claimed in any one of claims 15 to 18, wherein said gas or vapour space (11) is enclosed and means (51, 52) are provided for circulating a purge gas through said enclosed space.

20. Apparatus as claimed in any one of claims 15 to 19 for precipitating wax dissolved in a hydrocarbon oil mixture boiling in the lubricating oil range, further comprising means for reducing the solubility for the wax.

21. Apparatus as claimed in any one of claims 15 to 19, wherein means (22, 23, 25A, 76, 78A) are provided for introducing into said vessel (33A) a batch of said oil mixture together with a quantity of vaporizable oil solvent liquid, means (42A) are provided for removing vaporized oil solvent from the vessel (33A), a header (27A) is positioned inside the vessel for issuing make-up vaporizable oil solvent liquid downwardly onto said oil mixture in said vessel (33A), and the means for introducing free excess charge comprises a plurality of charge injectors (44A) in the header (27A), arranged to inject charge into the vaporizable oil solvent liquid issued by the header (27A), whereby the charge transfers to the oil mixture in said vessel.

22. An apparatus for performing a method according to any one of claims 1 to 14, comprising:
—a vessel (6) having a region (233) for containing a quantity of said component-containing liquid, the lateral peripheral boundary of said region (233) being defined solely by the vessel wall, said vessel (6), at least in said region (233), being devoid of any collector surfaces within the interior of said region;
—means (242) for introducing said quantity of said liquid into said region (233) of said vessel (6);
—means (2) for constraining a charge carrier liquid which is substantially free of said component to flow through an enclosed space filled by said charge carrier liquid;
—an exit orifice (3) through which the charge carrier liquid leaving the enclosed space passes;
—means (13, 4) arranged to introduce net unipolar free charge into the charge carrier liquid before the charge carrier liquid enters said exit orifice (3); and
—means providing a gas or vapour space (11) between said exit orifice (3) and said vessel (6) such that the charged carrier liquid passes through said gas or vapour space (11) as a spray or stream enveloped by gas or vapour in said gas or vapour space (11) and comes into contact with said quantity of component-containing liquid in said region of said vessel (6).

**Patentansprüche**

1. Verfahren zur Abtrennung einer Komponente, die eine Dispersion in einer kontinuierlichen Flüssigkeit bildet oder darin gelöst, bei dem überschüssige unipolare freie Ladung in eine Flüssigkeitsmenge eingebracht wird, die einen Bereich eines Gefäßes vollständig ausfüllt, wobei die seitliche Außenbegrenzung dieses Bereiches ausschließlich von der Gefäßwand definiert wird, das Gefäß zumindest in diesem Bereich frei von jeglichen Kollektorflächen im Inneren dieses Bereiches ist und wobei die Ladung im wesentlichen durch Elektronenemission in Abwesenheit von ionischer Dissoziation eingebracht wird, was dazu führt, daß die kontinuierliche Flüssigkeit als Medium dient, durch das eine volumetrische Verteilung der eingebrachten Ladung in diesem Bereich durch Ladungsbewegung relativ zu der kontinuierlichen Flüssigkeit erfolgt.

2. Verfahren nach Anspruch 1, bei dem die Komponente eine dispergierte flüssige Komponente ist, die eine von der kontinuierlichen Flüssigkeit abweichende Dichte besitzt, und die durch die Einbringung von freier Ladung bewirkte Tropfenzusammenballung der dispergierten Flüssigkomponente dazu führt, daß die Flüssigkeitstropfen zu einer ausreichenden Größe wachsen, um sich von der kontinuierlichen Flüssigkeit durch Aufschwimmen oder Absetzen zu trennen.

3. Verfahren nach Anspruch 1 oder 2, bei dem die diese Komponente enthaltende kontinuierliche Flüssigkeit und mindestens eine Kollektorfläche außerhalb dieses Bereiches miteinander in Kontakt gebracht werden, damit die abgetrennte Komponente sich auf der (den) Kollektoroberfläche(n) ansammelt.

4. Verfahren nach Anspruch 1 zur Abtrennung einer Komponente in Form einer Dispersion von Teilchen/Tropfen aus der kontinuierlichen Flüssigkeit, bei dem die durch die Einbringung von freier Ladung bewirkte Teilchen-/Tropfenzusammenballung der dispergierten Komponente dazu führt, daß die Teilchen/ Tropfen zu einer ausreichenden Größe wachsen, so daß diese Teilchen/Tropfen von der kontinuierlichen Flüssigkeit entfernt werden, wenn die die Teilchen/Tropfen enthaltende kontinuierliche Flüssigkeit einer Filtration unterworfen wird.

5. Verfahren nach Anspruch 1 zur Ausfällung von in einer im Schmierölbereich siedenden KohlenwasserstofföImischung gelösten Paraffinen, bei dem außerdem die Löslichkeit der Paraffine

EP 0 179 135 B1

verringert wird, um die Abtrennung der Paraffine zu fördern.

6. Verfahren nach Anspruch 5, bei dem die Löslichkeit der Paraffine verringert wird, indem die Ölmischung gekühlt wird, um zu bewirken, daß aufgelöste Paraffine eine Dispersion von Paraffinteilchen bilden, und ein Öllösungsmittel zu der Ölmischung hinzugegeben wird, um die Ausfällung der gelösten Paraffine als Paraffinteilchen zu fördern.

7. Verfahren nach Anspruch 5, bei dem eine erste Öllösungsmittelflüssigkeit zu der paraffinhaltigen Ölmischung unter Bildung eines Gemisches gegeben wird, das Gemisch auf den Trübungsprodukt des Gemisches in Abwesenheit jeglicher eingebrachter freier überschüsiger Ladung gekühlt wird und dann eine zweite Öllösungsmittelflüssigkeit zu dem Gemisch gegeben wird, wobei die zweite Öllösungsmittelflüssigkeit eine niedrigere Löslichkeit für Paraffine als für das Gemisch besitzt, um die Ausfällung der Paraffine als Paraffinteilchen zu bewirken, und bei dem die freie überschüssige Ladung in das Gemisch von paraffinhaltiger Ölmischung und erstem und zweitem Öllösungsmittel eingebracht wird, um die Agglomeration und das Wachstum der ausgefällten Paraffinteilchen zu bewirken.

8. Verfahren nach Anspruch 5, bei dem die Löslichkeit der Paraffine durch Zusatz einer verdampfbaren Öllösungsmittelflüssigkeit zu der Paraffine enthaltenden Ölmischung verringert wird und die Öllösungsmittelflüssigkeit zumindest teilweise verdampfen gelassen wird, um die Temperatur der Ölmischung zu erniedrigen.

9. Verfahren nach Anspruch 1 zur Förderung der Kristallisationskeimbildung eines in einem Lösungsmittel aufgelösten Stoffes während der Abtrennung des gelösten Stoffes, bei dem zusätzlich die Löslichkeit des gelösten Stoffes verringert wird und die Einbringung der Ladung in die Lösung von gelöstem Stoff und Lösungsmittel oder die Löslichkeitsverringerung zumindest solange durchgeführt wird, bis die Keimbildung des gelösten Stoffes in der geladenen Lösung erfolgt.

10. Verfahren nach Anspruch 9, bei dem die Ladungseinbringung und die Löslichkeitsverringerung gleichzeitig durchgeführt werden.

11. Verfahren nach Anspruch 9 oder 10, bei dem unter Bildung eines Gemisches ein flüssiges Additiv zu der Lösung gegeben wird, wobei das flüssige Additiv so beschaffen ist, daß es sich vorzugsweise physikalisch oder chemisch mit dem gelösten Stoff verbindet und dabei eine Affinität für freie überschüssige Ladung liefert.

12. Verfahren nach Anspruch 9, 10 oder 11, bei dem eine bestimmte Menge der Lösung in das Gefäß eingeführt wird und dann die Gefäßtemperatur verringert wird, während die freie überschüssige Ladung zu der Lösung in dem Gefäß gegeben wird.

13. Verfahren nach einem der vorangehenden Ansprüche, bei dem die freie überschüssige Ladung in einen Strom der Komponente enthaltenden Flüssigkeit injiziert wird und der geladene Strom durch einen Gas- oder Dampfraum in das Gefäß gerichtet ist, um jeglichen Verlust an Ladung aus dem Gefäß zurück zu dem Ort, wo die Ladungsinjektion erfolgt, zu verringern.

14. Verfahren nach einem der Ansprüche 1 bis 14, bei dem die freie Ladung in die Komponente enthaltende Flüssigkeit eingebracht wird, indem Ladung in eine Ladungsträgerflüssigkeit injiziert wird, die im wesentlichen frei von dieser Komponente ist, und dann die Trägerflüssigkeit und die Komponente enthaltende Flüssigkeit in dem Gefäß miteinander in Kontakt gebracht werden.

15. Vorrichtung zur Durchführung eines Verfahrens gemäß einem der vorangehenden Ansprüche, die umfaßt:
—Mittel (2), um die Flüssigkeit zu zwingen, durch einen eingeschlossenen, von der Flüssigkeit gefüllten Raum zu fließen,
—eine Austrittsöffnung (3), durch den die den eingeschlossenen Raum verlassende Flüssigkeit fließt,
—Mittel (13, 4), die angeordnet sind, um überschüssige unipolare freie Ladung in die Flüssigkeit einzubringen, bevor die Flüssigkeit in die Austrittsöffnung (3) eintritt,
—ein Gefäß, das für die Aufnahme der geladenen Flüssigkeit aus der Öffnung (3) angeordnet ist und einen Bereich (233) für die Aufnahme einer Menge der Flüssigkeit aufweist, wobei die seitliche Außenbegrenzung dieses Bereiches ausschließlich durch die Gefäßwand definiert ist und das Gefäß (6) zumindest in dem Bereich (233) frei von jeglichen Kollektorflächen im Inneren dieses Bereiches ist und
—Mittel, die einen Gas- oder Dampfraum (11) zwischen der Austrittsöffnung (3) und dem Gefäß (6) in der Weise liefern, daß die geladene Flüssigkeit durch den Gas- oder Dampfraum (11) als ein Spray oder Strom umhüllt von Gas oder Dampf in dem Gas- oder Dampfraum (11) strömt.

16. Vorrichtung nach Anspruch 15, bei der das Gefäß (6) ein Bett aus dicht gepackten Perlen (132) mit geringer elektrischer Leitfähigkeit in einem weiteren Bereich innerhalb des Gefäßes enthält, so daß die vergrößerten Teilchen/Tropfen, die sich unter dem Einfluß der Schwerkraft aus dem zuerst genannten Bereich (233) absetzen, in diesen weiteren Bereich eintreten und sich auf den freien Oberflächen der Perlen ansammeln.

17. Vorrichtung nach Anspruch 15 zur Abtrennung einer dispergierten Komponente in Form von Teilchen und/oder Tropfen aus der kontinuierlichen Flüssigkeit, bei der der Bereich das Ganze des Innenraumes des Gefäßes (100) einnimmt, die Vorrichtung ferner eine Trennvorrichtung (112) umfaßt und das Gefäß (100) mit Mitteln zur Beförderung der flüssigen Phase aus dem Bereich, der vergrößerte Teilchen/Tropfen enthält, in die Trennvorrichtung (112) zur Abtrennung der vergrößerten Teilchen/Tropfen (Figur 3) ausgestattet ist.

18. Vorrichtung nach einem der Ansprüche 15 bis 17, bei der die Mittel zur Ladungseinbringung einen Ladungsinjektor (1) umfassen.

19. Vorrichtung nach einem der Ansprüche 15 bis 18, bei der der Gas- oder Dampfraum (11) umschlossen ist und Mittel (51, 52) zum Zirkulieren eines Spülgases durch den umschlossenen Raum vorgesehen sind.

20. Vorrichtung nach eine der Ansprüche 15 bis 19 zur Ausfällung von in einer im Schmierölbereich siedenden Kohlenwasserstoffölmischung gelösten Paraffinen, die außerdem Mittel zur Verringerung der Löslichkeit der Paraffine umfaßt.

21. Vorrichtung nach einem der Ansprüche 15 bis 19, in der Mittel (22, 23, 25A, 76, 78A) zur Einbringung eines Ansatzes der Ölmischung zusammen mit einer Menge an verdampfbarer Öllösungsmittelflüssigkeit in das Gefäß (33A) vorgesehen sind, Mittel (42A) für die Entfernung von verdampftem Öllösungsmittel aus dem Gefäß (33A) vorgesehen sind, ein Kopfteil (27A) in dem Gefäß für die Abgabe von frischer verdampfbarer Öllösungsmittelflüssigkeit nach unten auf die Ölmischung in dem Gefäß (33A) innerhalb des Gefäßes angebracht ist und die Mittel für die Einbringung der freien überschüssigen Ladung eine Vielzahl von Ladungsinjektoren (44A) in dem Kopfteil (27A) umfassen, die zur Injizierung von Ladung in die verdampfbare Öllösungsmittelflüssigkeit angeordnet sind, die von dem Kopfteil (27A) abgegeben wird, wobei die Ladung in die Ölmischung im Gefäß transferiert wird.

22. Vorrichtung zur Durchführung eines Verfahrens gemäß einem der Ansprüche 5 bis 14, die umfaßt:
—ein Gefäß (6) mit einem Bereich (233) zur Aufnahme einer Menge der Komponente enthaltenden Flüssigkeit, wobei die seitliche Außenbegrenzung des Bereichs (233) ausschließlich durch die Gefäßwand definiert wird und das Gefäß (6) zumindest in dem Bereich (233) freie von jeglichen Kollektorflächen im Inneren dieses Bereiches ist,
—Mittel (242) zur Einbringung der Menge der Flüssigkeit in den Bereich (233) des Gefäßes (6),
—Mittel (2), um eine Ladungsträgerflüssigkeit, die im wesentlichen frei von der Komponente ist, zu zwingen, durch einen umschlossenen Raum zu fließen, der mit der Ladungsträgerflüssigkeit gefüllt ist,
—eine Austrittsöffnung (3), durch die die den umschlossenen Raum verlassende Ladungsträgerflüssigkeit fließt,
—Mittel (13, 4), die so angeordnet sind, daß sie überschüssige unipolare freie Ladung in die Ladungsträgerflüssigkeit einbringen, bevor die Ladungsträgerflüssigkeit in die Austrittsöffnung (3) eintritt und
—Mittel, die einen Gas- oder Dampfraum (11) zwischen der Austrittsöffnung (3) und dem Gefäß (6) liefern, so daß die geladene Trägerflüssigkeit durch den Gas- oder Dampfraum (11) als ein Spray oder Strom eingeschlossen von Gas oder Dampf in dem Gas- oder Dampfraum (11) strömt und mit der Menge der Komponente enthaltenden Flüssigkeit in dem Bereich des Gefäßes (6) in Kontakt kommt.

**Revendications**

1. Procédé de séparation d'un composant qui forme une dispersion dans, ou qui est dissous dans, un liquide continu, dans lequel une charge libre unipolaire nette est introduite dans une quantité du liquide remplissant complètement une zone d'une cuve, la limite périphérique latérale de ladite zone étant définie uniquement par la paroi de la cuve et la cuve, au moins dans ladite zone, étant dépourvue de toutes surfaces collectrices à l'intérieur de ladite zone, ladite charge étant introduite, sensiblement, par émission d'électrons en l'absence de dissociation ionique, qui amène le liquide continu à agir comme un agent grâce auquel la distribution volumétrique de la charge introduite a lieu dans ladite zone par déplacement de charge par rapport au liquide continu.

2. Procédé selon la revendication 1, dans lequel ledit composant est un composant liquide dispersé dont le liquide présente une densité différente de celle du liquide continu, et la conglomération de gouttelettes du liquide dispersé produite par l'introduction de la charge libre amène les gouttelettes de liquide à croître suffisamment en taille pour se séparer du liquide continu par flottaison ou sédimentation par gravité.

3. Procédé selon la revendication 1 ou 2, dans lequel le liquide continu contenant le dit composant et au moins une surface collectrice, à l'extérieur de ladite zone, sont amenés en contact l'un avec l'autre, de façon à amener le composant séparé à s'accumuler sur la ou les dites surfaces collectrices.

4. Procédé selon la revendication 1 de séparation d'un composant sous la forme d'une dispersion de particules/gouttelettes du liquide continu, dans lequel la conglomération de particules/gouttelettes du composant dispersé produite par l'introduction de la charge libre amène les particules/gouttelettes à croître suffisamment en taille pour que, en soumettant le liquide continu contenant les particules/ gouttelettes à la filtration, lesdites particules/gouttelettes sont extraites du liquide continu.

5. Procédé selon la revendication 1 de précipitation de paraffine dissoute dans un mélange d'huile d'hydrocarbure à point d'ébullition dans le domaine de l'huile de lubrification, comportant l'étape supplémentaire de réduction de la solubilité de la paraffine de façon à faciliter la séparation de la paraffine.

6. Procédé selon la revendication 5, dans lequel la solubilité de la paraffine est réduite en refroidissant le mélange d'huile afin d'amener la paraffine dissoute à former une dispersion de particules de paraffine, et un solvant d'huile est ajouté au mélange d'huile afin de déclencher la précipitation de paraffine dissoute sous forme de particules de paraffine.

EP 0 179 135 B1

7. Procédé selon la revendication 5, dans lequel un premier liquide solvant d'huile est ajouté au mélange d'huile paraffinée afin de former un mélange, le mélange est refroidi jusqu'au point de trouble du mélange en l'absence d'une quelconque charge libre en excès introduite, et un deuxième liquide solvant d'huile est ensuite ajouté audit mélange, ledit deuxième liquide solvant d'huile ayant une solubilité inférieure pour la paraffine que pour ledit mélange, de façon à amener la paraffine à précipiter sous forme de particules de paraffine, et la charge libre en excès est introduite dans le mélange de mélange d'huile paraffinée et de premier et deuxième solvants d'huile, de façon à provoquer l'agglomération et la croissance des particules de paraffine précipitées.

8. Procédé selon la revendication 5, dans lequel la solubilité de la paraffine est réduite en ajoutant un liquide solvant d'huile vaporisable au mélange d'huile contenant la paraffine et en permettant au liquide solvant d'huile de sa vaporiser au moins partiellement de façon à réduire la température du mélange d'huile.

9. Procédé selon la revendication 1 de déclenchement de la nucléation d'un soluté dissous dans un solvant, au cours de la séparation du soluté, comportant l'étape supplémentaire de réduction de la solubilité de soluté, au moins l'introduction de charge dans la solution de soluté et de solvant ou la réduction de solubilité étant réalisée au moins jusqu'à ce que la nucléation du soluté dans la solution chargée ait lieu.

10. Procédé selon la revendication 9, dans lequel l'introduction de charge et la réduction de solubilité sont réalisées simultanément.

11. Procédé selon la revendication 9 ou 10, dans lequel un additif liquide est ajouté à la solution de façon à former un mélange, ledit additif liquide étant tel qu'il se combine préférentiellement, physiquement ou chimiquement, au soluté tout en assurant une affinité avec la charge libre en excès.

12. Procédé selon la revendication 9, 10 ou 11, dans lequel une quantité donnée de ladite solution est introduite dans ladite cuve et la température de cuve est réduite alors que la charge libre en excès est ajoutée à la solution dans la cuve.

13. Procédé selon l'une quelconque des revendications précédentes, dans lequel ladite charge libre en excès est injectée dans un courant de liquide contenant le composant et le courant chargé est dirigé dans ladite cuve au travers d'un espace de gaz ou de vapeur, de façon à réduire toute dissipation de charge de ladite cuve en retour vers le point où l'injection de charge a lieu.

14. Procédé selon l'une quelconque des revendications 1 à 12, dans lequel la charge libre est introduite dans le liquide contenant le composant en injectant la charge dans un liquide porteur de charge qui est sensiblement exempt dudit composant et en amenant ensuite le liquide porteur et le liquide contenant le composant en contact l'un avec l'autre dans ladite cuve.

15. Dispositif pour la mise en oeuvre d'un procédé selon l'une quelconque des revendications précédentes, comportant:
—des moyens (2) destinés à obliquer ledit liquide à s'écouler au travers d'un espace fermé rempli par ledit liquide;
—un orifice de sortie (3) au travers duquel passe le liquide quittant l'espace fermé;
—des moyens (13, 4) prévus pour introduire une charge libre unipolaire nette dans le liquide avant que le liquide entre dans ledit orifice de sortie (3);
—une cuve prévue pour recevoir le liquide chargé provenant dudit orifice (3) et ayant une zone (233) destinée à contenir une quantité dudit liquide, la limite périphérique latérale de ladite zone étant définie uniquement par la paroi de la cuve, ladite cuve (6), au moins dans ladite zone (233), étant dépourvue de toutes surfaces collectrices à l'intérieur de ladite zone; et
—des moyens assurant un espace de gaz ou de vapeur (11) entre ledit orifice de sortie (3) et ladite cuve (6) de telle sorte que le liquide chargé passe au travers dudit espace de gaz ou de vapeur (11) sous forme d'une pulvérisation ou d'un courant enveloppé par le gaz ou la vapeur dans ledit espace de gaz ou de vapeur (11).

16. Appareil selon la revendication 15, dans lequel ladite cuve (6) contient un lit de perles empilées de manière dense (132) de faible conductivité électrique dans une zone supplémentaire à l'intérieur de la cuve de telle sorte que des particules/gouttelettes agrandies, se déposant sous l'effet de la pesanteur depuis la zone mentionnée en premier lieu (233), pénètrent dans ladite zone supplémentaire et s'accumulent sur les surfaces exposées desdites perles.

17. Appareil selon la revendication 15 pour la séparation d'un composant dispersé sous la forme de particules et/ou de gouttelettes dudit liquide continu, dans lequel ladite zone occupe la totalité de l'espace intérieur de ladite cuve (100), l'appareil comportant en outre un dispositif de séparation (112) et ladite cuve (100) étant pourvue de moyens (111) destinés à transporter la phase liquide depuis ladite zone, contenant les particules/gouttelettes agrandies, vers ledit dispositif de séparation (112), de façon à séparer les particules/gouttelettes agrandies (figure 3).

18. Dispositif selon l'une quelconque des revendications 15 à 17, dans lequel lesdits moyens d'introduction de charge comportent un injecteur de charge (1).

19. Dispositif selon l'une quelconque des revendications 15 à 18, dans lequel ledit espace de gaz ou de vapeur (11) est clos et des moyens (51, 52) sont prévus pour la circulation d'un gaz de purge au travers dudit espace clos.

20. Dispositif selon l'une quelconque des revendications 15 à 19 de précipitation de paraffine dissoute

27

dans un mélange d'huile hydrocarbure à point d'ébullition dans le domaine de l'huile de lubrification, comportant en outre des moyens destinés à réduire la solubilité de la paraffine.

21. Dispositif selon l'une quelconque des revendications 15 à 19, dans lequel des moyens (22, 23, 25A, 76, 78A) sont prévus pour introduire dans ladite cuve (33A) une charge dudit mélange d'huile avec une quantité de liquide solvant d'huile vaporisable, des moyens (42A) sont prévus pour extraire le solvant d'huile vaporisé de la cuve (33A), un collecteur (27A) est positionné à l'intérieur de la cuve afin de diriger le liquide solvant d'huile vaporisable d'appoint vers le bas sur ledit mélange d'huile dans ladite cuve (33A), et les moyens destinés à introduire la charge libre en excès comportent plusieurs injecteurs de charge (44A) dans le collecteur (27A), disposés de façon à injecter la charge dans le liquide solvant d'huile vaporisable délivré par le collecteur (27A), la charge se transférant vers le mélange d'huile dans la dite cuve.

22. Dispositif pour la mise en oeuvre d'un procédé selon l'une quelconque des revendications 5 à 14 comportant:

—une cuve (6) ayant une zone (233) destinée à contenir une quantité dudit liquide contenant le composant, la limite périphérique latérale de ladite zone (233) étant définie uniquement par la paroi de la cuve, ladite cuve (6), au moins dans ladite zone (233), étant dépourvue de toutes surfaces collectrices à l'intérieur de ladite zone;

—des moyens (242) destinés à introduire ladite quantité de liquide dans ladite zone (233) de la dite cuve (6);

—des moyens (2) destinés à obliger un liquide porteur de charge qui est sensiblement exempt dudit composant à s'écouler au travers d'un espace clos rempli par ledit liquide porteur de charge;

—un orifice de sortie (3) au travers duquel passe le liquide porteur de charge quittant l'espace clos;

—des moyens (13, 4) prévus pour introduire une charge libre unipolaire nette dans le liquide porteur de charge avant que le liquide porteur de charge pénètre dans le dit orifice de sortie (3); et

—des moyens assurant un espace de gaz ou de vapeur (11) entre ledit orifice de sortie (3) et ladite cuve (6) de telle sorte que le liquide porteur de charge chargé passe au travers dudit espace de gaz ou de vapeur (11) sous forme d'une pulvérisation ou d'un courant enveloppé par le gaz ou la vapeur dans ledit espace de gaz ou de vapeur (11) et vient en contact avec ladite quantité de liquide contenant le composant dans ladite zone de ladite cuve (6).

FIG. 1

FIG. 2

FIG. 3

FIG. 4

FIG. 5

FIG. 6

FIG. 7

NUMBER OF CRYSTALS ➔

WAX CRYSTAL SIZE (MICRONS) ➔

EP 0 179 135 B1

FIG. 8

TEMPERATURE (°C)

TURBIDITY

U

C

EP 0 179 135 B1

8

FIG. 9

FIG. 10

EP 0 179 135 B1

FIG. 11

FIG. 12

EP 0 179 135 B1

FIG. 13

EP 0 179 135 B1

FIG. 14

EP 0 179 135 B1

FIG. 15

200

200

FIG. 16

200

200

FIG. 17